(19) **Europäisches Patentamt / European Patent Office / Office européen des brevets**

(11) **EP 4 203 222 B1**

(12) **FASCICULE DE BREVET EUROPEEN**

(45) Date de publication et mention de la délivrance du brevet: **10.09.2025 Bulletin 2025/37**

(21) Numéro de dépôt: **22205133.6**

(22) Date de dépôt: **02.11.2022**

(51) Classification Internationale des Brevets (IPC): *H02J 3/06* (2006.01)  *H02J 3/26* (2006.01)  *H02J 3/38* (2006.01)

(52) Classification Coopérative des Brevets (CPC): **H02J 3/26; H02J 3/06; H02J 3/381;** H02J 2203/10

(54) **PROCÉDÉ DE RÉGULATION CONJOINTE DE LA TENSION DANS UNE BRANCHE MOYENNE TENSION HTA ET DES BRANCHES BASSE TENSION BT DONT UNE BRANCHE BASSE TENSION BT TRIPHASÉE**

VERFAHREN ZUR GEMEINSAMEN SPANNUNGSREGELUNG IN EINEM MITTELSPANNUNGSZWEIG UND NIEDERSPANNUNGSZWEIG MIT EINEM DREIPHASIGEN NIEDERSPANNUNGSZWEIG

METHOD FOR JOINT VOLTAGE REGULATION IN A MEDIUM VOLTAGE BRANCH AND LOW VOLTAGE BRANCHES INCLUDING A THREE-PHASE LOW VOLTAGE BRANCH

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **21.12.2021 FR 2114137**

(43) Date de publication de la demande: **28.06.2023 Bulletin 2023/26**

(73) Titulaire: **Electricité de France 75008 Paris (FR)**

(72) Inventeurs:
• **LAUGERE, Andréa 75014 PARIS (FR)**
• **ZORGATI, Riadh 92260 FONTENAY AUX ROSES (FR)**
• **CROTEAU, Dominique 78500 SARTROUVILLE (FR)**
• **MINOUX, Michel 75013 PARIS (FR)**

(74) Mandataire: **Plasseraud IP 104 Rue de Richelieu CS92104 75080 Paris Cedex 02 (FR)**

(56) Documents cités:
EP-A1- 3 598 598    FR-A1- 3 006 819
US-A1- 2012 022 713

**Description**

**Domaine technique**

La présente divulgation relève du domaine des procédés de régulation conjointe d'une tension dans une branche moyenne tension et dans une pluralité de branches basse tension, dont au moins une branche basse tension est en mode triphasé, d'un réseau de distribution d'électricité qui y sont rattachées.

**Technique antérieure**

La gestion d'un réseau de distribution a pour objet de piloter de manière optimale son fonctionnement afin de minimiser les pertes, maîtriser les fluctuations de tension, et garantir ainsi une continuité de service dans des conditions économiques raisonnables. Or, la gestion du réseau électrique de distribution est amenée à évoluer profondément en raison de nombreux facteurs. Ces facteurs comprennent notamment le développement de nouveaux moyens décentralisés de production d'électricité dé-carbonée, fondée sur l'utilisation de sources d'énergie primaires renouvelables, l'évolution des usages de l'électricité, par exemple avec l'apparition des véhicules électriques, l'évolution des modes de consommation, par exemple en différant certaines consommations pour réduire la facture énergétique ou encore l'apparition de nouveaux acteurs sur le marché de l'énergie.

Les moyens de production décentralisée, ou « générateurs d'énergie dispersée GED », peuvent être gérés par des producteurs indépendants. Les moyens de production décentralisée se caractérisent par le fait qu'ils sont de puissance limitée et souvent raccordés au réseau de distribution. En se situant au plus près des points de consommation, ces moyens permettent de diminuer le coût de transport de l'énergie, les transits de puissance active au niveau du poste source et ainsi les pertes en ligne sur le réseau de transport. Toutefois, la connexion des moyens de production décentralisée sur le réseau de distribution pose de nouveaux problèmes d'exploitation, notamment la difficulté de tenir le plan de tension, c'est-à-dire les valeurs de tension dans les plages réglementaires.

Ainsi, dans le cadre de la transition énergétique, ces évolutions induisent des difficultés entraînant la mise en place de nouvelles fonctions de conduite du réseau de distribution électrique à moyenne et basse tension. L'une des principales difficultés est le contrôle et la régulation de la tension. Or, à mesure que des générateurs distribués tels que les éoliennes et le photovoltaïque deviennent de plus en plus répandus et que les véhicules électriques et les systèmes de stockage d'énergie se développent, le nombre croissant de connexions aux réseaux de distribution entraîne de plus en plus de problèmes au niveau de la tension, en raison des fortes variabilités d'injections et soutirages que cela entraîne. Un contrôle et une régulation insuffisants de la tension peut affecter l'efficacité, la capacité et la performance du réseau de distribution.

Actuellement, il est connu des procédés permettant de déterminer l'état en tension en vue de réguler la tension de branches basse tension monophasées d'un réseau de distribution, tel que décrit dans le document FR3084168. Il est également connu des procédés permettant de déterminer l'état en tension en vue de réguler la tension de branches moyenne tension d'un réseau de distribution, tel que décrit dans le document FR3006819.

Bien que les procédés décrits dans ces documents permettent de déterminer l'état en tension respectif des branches basse tension BT et d'une branche moyenne tension HTA d'une manière fiable, ils ne prennent pas en compte les interactions électriques entre ces branches.

Il est également connu du document CN107196316B un procédé de régulation de la tension dans un réseau de distribution, dont l'utilisation est limitée aux onduleurs photovoltaïques, avec un contrôle coordonné du système de régleur en charge de la tension, la sélection de batteries de condensateurs et un ajustement des puissances active et réactive des installations photovoltaïques. Toutefois, ce document propose une approche peu précise et spécifique aux générateurs photovoltaïques. EP 3 598 598 est un autre exemple.

Ainsi, les procédés existants présentent des solutions partielles et limitées. Ils sont en effet relatifs soit à des configurations particulières, par exemple adaptés à un seul type de générateur, ou uniquement à une branche basse tension ou uniquement à une branche moyenne tension.

Il existe donc un besoin pour un procédé de régulation de la tension sur un réseau de distribution, procédé pouvant être mis en œuvre sur tout réseau de distribution comprenant des branches moyenne et basse tension, et prenant en compte les interactions entre ces branches, de même que la nature de ces branches, entre des branches monophasées, triphasées équilibrées ou triphasées déséquilibrées.

**Résumé**

La présente divulgation vient améliorer la situation.

Il est proposé un procédé de régulation conjointe d'une tension en chaque nœud d'un réseau de distribution comprenant une branche moyenne tension, HTA, et au moins une, et de préférence une pluralité de branches basse tension, BT, le réseau de distribution comprenant en outre une pluralité de générateurs d'énergies, chaque branche basse tension étant rattachée à la branche moyenne tension en un nœud de rattachement au niveau d'un transformateur HTA/BT, chaque branche basse tension comprenant en outre un nœud de référence, une pluralité de nœuds commandables et une pluralité de nœuds non-commandables, la branche moyenne tension étant alimentée par une branche haute tension rattachée à la branche moyenne tension en un nœud de rattachement au niveau d'un transformateur HTB/HTA avec régleur en charge, la branche moyenne tension comprenant en outre un nœud de référence, une pluralité de nœuds commandables et une pluralité de nœuds non-commandables, chaque nœud des branches moyenne tension et basse tension étant soumis à des soutirages et/ou injections d'énergie, ladite au moins une branche, ou au moins une parmi la pluralité de branches, basse tension étant en mode triphasé, le procédé comprenant :

- une définition :

    °d'une tension cible en chaque nœud de chaque branche basse tension ,
    °d'une première plage de tensions prescrite encadrant la tension cible de chaque branche basse tension ;
    °d'une tension cible en chaque nœud de la branche moyenne tension,
    ° d'une deuxième plage de tension prescrite encadrant la tension cible de la branche moyenne tension ;

et le procédé comprenant, à chaque pas d'un temps prédéterminé :

- une détermination d'un état en tension des branches basse tension
- une détermination d'un état en tension de la branche moyenne tension prenant en compte des interactions électriques des branches basse tension qui lui sont rattachées
- puis, une comparaison :

    °de l'état en tension effectif de chaque branche basse tension avec la première plage de tension prescrite
    ° de l'état en tension effectif de la branche moyenne tension avec la deuxième plage de tension prescrite ;

- si au moins une tension de la branche basse tension et/ou de la branche moyenne tension est en en-dehors respectivement de la première plage de tension prescrite et/ou de la deuxième plage de tension prescrite :
- une recherche d'un ensemble de commandes de régulation conjointe permettant que la tension effective de la branche basse tension et de la branche moyenne tension soient compris respectivement dans la première plage de tension prescrite et dans la deuxième plage de tension prescrite :
- une détermination et une mise en œuvre d'au moins une commande optimale de régulation parmi l'ensemble de commandes de régulation conjointe caractérisé en ce que la recherche de l'ensemble de commandes de régulation conjointe pour chaque branche basse tension triphasée est précédée par une construction d'une matrice d'admittance triphasée comprenant, pour chaque branche basse tension triphasée :

    ° une création d'une liste de nœuds pour chacune des trois phases de la branche basse tension triphasée en effectuant :

        *un triplement de chaque nœud de la branche basse tension, un nœud de chaque triplet de nœuds étant respectivement associé à l'une des trois phases,
        * une correspondance d'indices des nœuds de chacune des trois phases,

    ° une obtention de trois sous-matrices d'admittance correspondant respectivement à une matrice d'admittance de chacune des trois phases de la branche BT,
    ° une reconstruction d'une matrice d'admittance triphasée par une concaténation des trois sous-matrices d'admittance en prenant en compte une admittance correctrice illustrant des pertes au niveau du transformateur HTA/BT de la branche BT considérée.

Le procédé de régulation proposé s'applique à tout réseau de distribution, quelle que soit sa topologie arborescente, couvrant ainsi les réseaux urbains, semi ruraux ou ruraux. La nature triphasée des branches basse tension est prise en compte de sorte que le procédé proposé tient compte des réalités du terrain et permet d'obtenir des résultats plus précis et réalistes.

Selon un autre aspect, il est proposé un programme informatique comportant des instructions pour la mise en œuvre de tout ou partie d'un procédé tel que défini dans les présentes lorsque ce programme est exécuté par un processeur ou plusieurs processeurs. Selon un autre aspect, il est proposé un support d'enregistrement non transitoire, lisible par un ordinateur, sur lequel est enregistré un tel programme.

Les caractéristiques exposées dans les paragraphes suivants peuvent, optionnellement, être mises en œuvre. Elles peuvent être mises en œuvre indépendamment les unes des autres ou en combinaison les unes avec les autres :

La détermination de ladite au moins une commande optimale de régulation à mettre en œuvre parmi l'ensemble de commandes de régulation comprend

- une obtention d'une liste hiérarchisée de commandes de régulation selon un ordre de priorité décroissante de mise en œuvre,
- une simulation d'une régulation conjointe de la branche HTA et des branches BT par l'activation d'une première commande de régulation parmi l'ensemble de commandes de régulation conjointe, la première commande activée correspondant à une première commande sur la liste hiérarchisée, et, si l'état en tension des branches BT et HTA n'est pas compris dans la première plage de tension prescrite et/ou dans la deuxième plage de tension prescrite,

  ° procéder itérativement à d'autres simulations de régulation conjointe en ajoutant, à chaque itération, la commande de régulation suivante dans la liste hiérarchisée, jusqu'à ce que les états en tension des branches basse tension et de la branche moyenne tension soient compris respectivement dans la tension prescrite plage de tension prescrite et dans la deuxième plage de sécurité,

- lorsque les états en tension des branches basse tension et de la branche moyenne tension sont compris respectivement dans la première plage de tension prescrite et dans la deuxième plage de tension prescrite, une obtention en sortie de ladite au moins une commande optimale de régulation à mettre en œuvre.

Ainsi, cette étape permet la sélection d'un nombre minimum et suffisant de commandes optimales à mettre en œuvre. En effet, dès que les états en tension des branches basse tension BT et de la branche moyenne tension HTA entrent dans leur plage respective de tension prescrite, la sélection itérative s'arrête et seules les commandes sélectionnées sont effectivement mises en œuvre. Cette étape est particulièrement avantageuse puisqu'il peut exister des contraintes ne permettant pas l'activation de toutes les commandes de régulation.

La recherche de l'ensemble de commandes de régulation conjointe pour chaque branche basse tension et pour la branche HTA est précédée par une étape de calcul de valeurs de commandes de régulation comprenant :

- une résolution itérative, par une technique de point fixe, d'un problème d'optimisation prenant en compte :

  °des contraintes relatives aux domaines admissibles des puissances actives et réactives aux nœuds commandables,
  °des contraintes relatives à la configuration triphasée de la branche basse tension,

  chaque itération comprenant une résolution d'un programme linéaire intégrant une linéarisation des équations de Kirchhoff,
  le programme retournant en sortie des valeurs des commandes de régulation,
  les commandes de régulation comprenant :

  ° un ajustement d'une valeur de tension au nœud de rattachement d'une branche basse tension à la branche HTA pour un réglage en charge du transformateur HTA/BT, lorsque le réglage est disponible,
  ° un ajustement d'une valeur de tension au nœud de rattachement de la branche moyenne tension pour un réglage en charge des transformateurs HTB/HTA,
  °un ajustement de puissance active (P), en moyenne tension et en basse tension,
  °un ajustement de puissance réactive, en moyenne tension et en basse tension, et/ou
  °un ajustement de puissance active et réactive, en moyenne tension et en basse tension.

Les étapes permettant de déterminer les valeurs des commandes de régulation prend donc en compte le caractère triphasé de certaines branches basse tension, ce qui permet d'obtenir une régulation plus fiable et tenant compte de la réalité du terrain.

Lorsque un domaine admissible des puissances actives et réactives aux nœuds commandables n'est pas convexe, le procédé comprend

- une convexification du domaine initial non-convexe,
- suite à la résolution du problème d'optimisation, une vérification que les valeurs d'ajustement des puissances active et réactive (P, Q)se trouvent dans le domaine initial et, si ce n'est pas le cas,

* une substitution des valeurs d'ajustement des puissances active et réactive par des valeurs comprises dans le domaine initial, pour disposer d'une solution respectant le domaine initial d'ajustement des puissances actives et réactives.

Cette étape permet d'élargir l'application du procédé de régulation conjointe à tout type d'équipement, en prenant en compte notamment la non-convexité des domaines d'ajustement des puissances active et réactive de ces équipements. Parmi ces équipements se trouvent notamment les équipements éoliens.

La recherche de l'ensemble de commandes de régulation conjointe pour les branches basse tension et la branche HTA comprend :

- respectivement, une définition d'un ensemble de commandes de régulation pour chaque branche basse tension BT et la branche moyenne tension HTA, chaque ensemble de commandes de régulation comprenant toutes les commandes de régulation possibles,
- pour chaque branche basse tension, une première étape de simulation d'une régulation par une mise en œuvre de l'ensemble des commandes de régulation de la branche basse tension considérée,
- une détermination de l'état en tension de chaque branche basse tension et, lorsque l'état en tension de chaque branche BT entre dans la première plage de tension prescrite:

    ° une agrégation de données relatives à chaque branche basse tension au niveau du nœud de rattachement respectif de chaque branche basse tension à la branche HTA,
    ° une simulation de régulation de la branche moyenne tension HTA par une activation de l'ensemble des commandes de régulation de la branche HTA, en tenant compte des données agrégées,
    ° un calcul des valeurs de tension aux nœuds de référence des branches basse tension agrégées,
    °et pour chaque branche basse tension ne disposant pas d'un régleur en charge :

        *la valeur de la tension au nœud de référence de la branche basse tension est imposée sur une valeur de la tension au nœud de rattachement de la branche basse tension à la branche moyenne tension, multipliée par un rapport de transformation du transformateur, le procédé comprenant ensuite la mise en œuvre itérative des étapes suivantes jusqu'à ce qu'un premier critère d'arrêt soit rempli :,

            ¤ une modification de l'ensemble des commandes de chaque branche basse tension BT considérée en retirant une commande correspondant à un réglage en charge du transformateur,
            ¤ une autre étape de simulation de régulation de chaque branche basse tension ne disposant pas d'un régleur en charge, en activant l'ensemble des commandes de régulation de chaque branche basse tension BT considérée ,
            ¤puis, une obtention de chaque état en tension des branches basse tension ne disposant pas d'un régleur en charge,
            ¤ un retour à l'étape d'agrégation des données,

        * si une branche basse tension dispose d'un régleur en charge, l'ensemble de commandes de régulation comprend toutes les commandes de régulation possibles ,

- le procédé comprenant ensuite le calcul des états en tension des branches moyenne et basse tension (HTA, BT), suite à l'activation respective des ensembles de commandes de chaque branche basse tension BT et de la branche moyenne tension HTA,
- et, lorsque les états en tension des branches moyenne et basse tension entrent respectivement dans la première plage de tension prescrite et dans la deuxième plage de tension prescrite, une obtention de chaque ensemble de commandes de régulation correspondant à chaque branche basse tension et pour la branche moyenne tension, lesdits ensembles de commandes formant l'ensemble de commandes de régulation conjointe.

Cette partie du procédé permet de déterminer les ensembles de commandes de régulation conjointe, à partir de l'activation de toutes les commandes possibles. Ainsi, dans un premier temps, il est possible de déterminer s'il existe une solution de régulation conjointe en activant toutes les commandes de régulation possibles. En effet, si les états en tension ne sont pas conformes même en activant toutes les commandes, alors il n'existe pas de commande permettant la régulation au pas de temps donné de mis en œuvre du procédé. Dans un deuxième temps, cette partie permet d'écarter les commandes qui ne sont pas disponibles pour la régulation, notamment le régleur en charge du transformateur HTA/BT.

Si, suite à la détermination de l'état en tension de chaque branche basse tension, au moins un état en tension d'une branche basse tension est en dehors de la première plage de tensions prescrite, une alarme est activée pour ladite au moins une branche basse tension BT, et/ou

- Si, suite au calcul des états en tension des branches moyenne et basse tension (HTA, BT), l'état en tension d'au moins une branche basse tension BT ou l'état en tension de la branche moyenne tension HTA est en-dehors respectivement de la première plage de tensions prescrite et/ou de la deuxième plage de tensions prescrite, une alarme est activée.

L'alarme est activée pour indiquer qu'il n'existe pas de solution pour une régulation conjointe au pas de temps courant. Il est avantageux de déterminer le plus tôt possible qu'une telle solution n'existe pas. Ainsi, une première alarme peut être déclenchée dès qu'il est déterminé qu'au moins un état en tension d'une branche basse tension BT n'est pas conforme suite à l'activation de toutes les commandes de régulation.

La détermination de l'état en tension des branches basse tension BT et de la branche moyenne tension HTA comprend :

- une détermination de l'état en tension de chaque branche basse tension BT,
- puis, une étape d'agrégation de données relatives à chaque branche basse tension au niveau du nœud de rattachement respectif de chaque branche basse tension à la branche HTA en

  * calculant un couple de valeurs de puissances active et réactive de chaque branche basse tension, chaque couple de puissances active et réactive étant respectivement ajouté à des valeurs de puissances active et réactive aux nœuds de rattachement de chaque branche BT à la branche HTA, et en
  *corrigeant chaque terme diagonal d'une matrice d'admittance de la branche moyenne tension HTA, chaque terme diagonal correspondant respectivement à chaque nœud de rattachement d'une branche BT à la branche HTA,:

    - suite à l'étape d'agrégation, une obtention de l'état en tension effectif en chaque nœud de la branche HTA et des branches basse tension BT.

Les interactions, fortes, entre la branche moyenne tension HTA et les branches basse tension BT qui lui sont rattachées sont prises en compte grâce à l'étape d'agrégation. L'agrégation correspond, en particulier, à une représentation agrégée de l'influence électrique des branches basse tension BT dans la branche moyenne tension HTA. Ainsi, la détermination de l'état en tension de la branche moyenne tension HTA et des branches basse tension BT tient compte des interactions électriques entre ces branches, soumises à des injections/soutirages connus. L'état en tension est fait sur chaque branche basse tension BT rattachées à la branche moyenne tension HTA considérée, puis chaque branche basse tension BT est agrégée en un nœud équivalent représentant la puissance en ce nœud vue de la branche moyenne tension HTA. Ainsi agrégées, les puissances sur tous les nœuds de la branche moyenne tension HTA sont connues et l'état en tension peut être évalué selon toute technique connue, en tenant compte des interactions entre les branches.

Les états en tension effectifs en chaque nœud de la branche HTA et des branches BT sont obtenus pas une application itérative des étapes suivantes, jusqu'à satisfaire un premier critère d'arrêt prédéfini :

  °une détermination d'un état en tension effectif de la branche moyenne tension, prenant en compte les données agrégés de chaque branche basse tension, pour obtenir des tensions effectives en chaque nœud de la branche moyenne tension,
  °puis, une détermination d'un état en tension effectif de chaque branche basse tension pour obtenir des tensions effectives en chaque nœud de chaque branche basse tension, à partir duquel sont obtenues de nouvelles valeurs des couples de puissances active et réactive de chaque branche basse tension et des termes diagonaux de la matrice d'admittance du la branche HTA

- une obtention de l'état en tension effectif en chaque nœud de la branche HTA et des branches BT lorsque le première critère d'arrêt est satisfait.

L'application itérative de l'agrégation permet une évaluation de l'état en tension plus fine et plus précise.

Le procédé est mis en œuvre sur un calculateur ayant une architecture multicœurs.

De cette manière, lorsque les réseaux considérés sont de taille importante, certains calculs peuvent être mis en œuvre parallèlement, de sorte que la régulation peut être effectuée à chaque pas d'un temps prédéterminé. Par exemple ce pas de temps est de 10 minutes.

**Brève description des dessins**

D'autres caractéristiques, détails et avantages apparaîtront à la lecture de la description détaillée ci-après, et à l'analyse des dessins annexés, sur lesquels :

**Fig. 1**

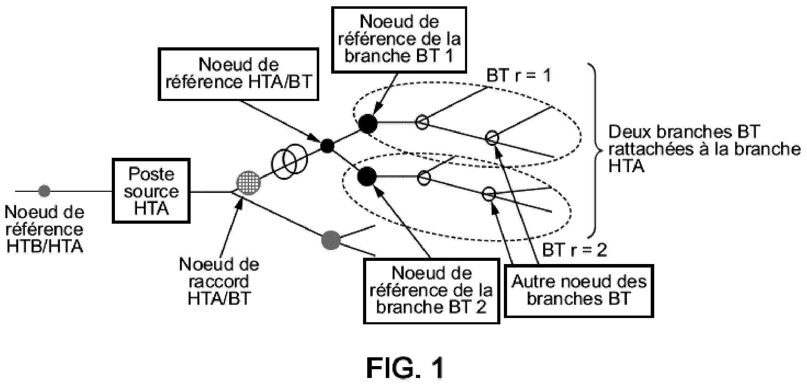

[Fig. 1] montre un schéma simplifié d'un réseau de distribution selon une réalisation.
**Fig. 2**

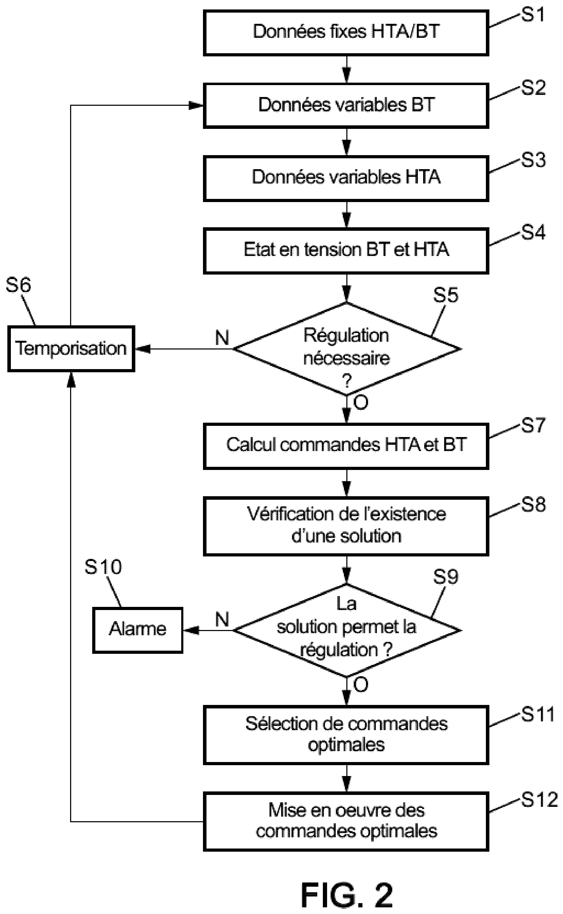

[Fig. 2] montre des étapes d'un procédé de régulation selon une réalisation.
**Fig. 3**

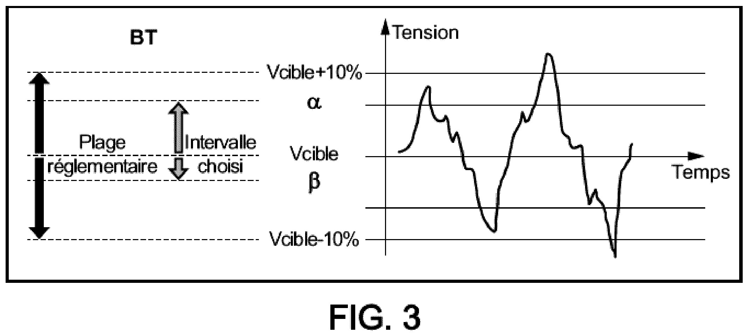

[Fig. 3] montre un exemple de plages de variations autorisées de la tension sur une branche BT.
**Fig. 4**

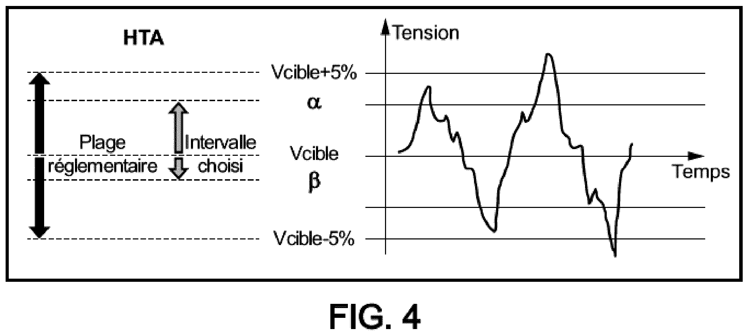

[Fig. 4] montre un autre exemple de plages de variations autorisées des de la tension sur une branche HTA.
**Fig. 5**

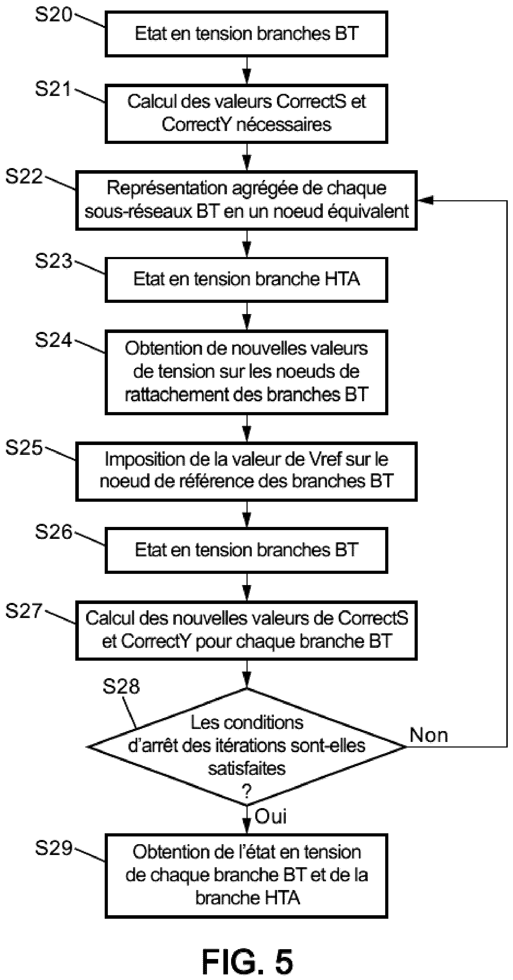

[Fig. 5] montre un exemple de détermination des états en tension des branches basse tension BT et de la branche moyenne tension HTA.
**Fig. 6**

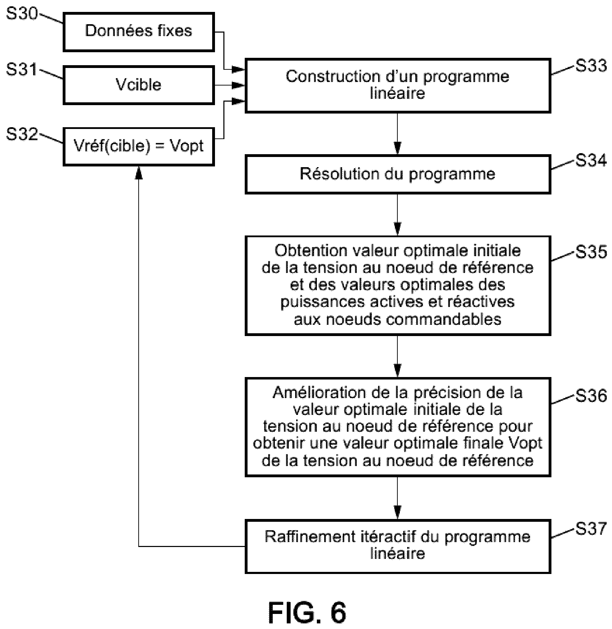

[Fig. 6] montre la construction du programme linéaire permettant le calcul des commandes de régulation.
**Fig. 7**

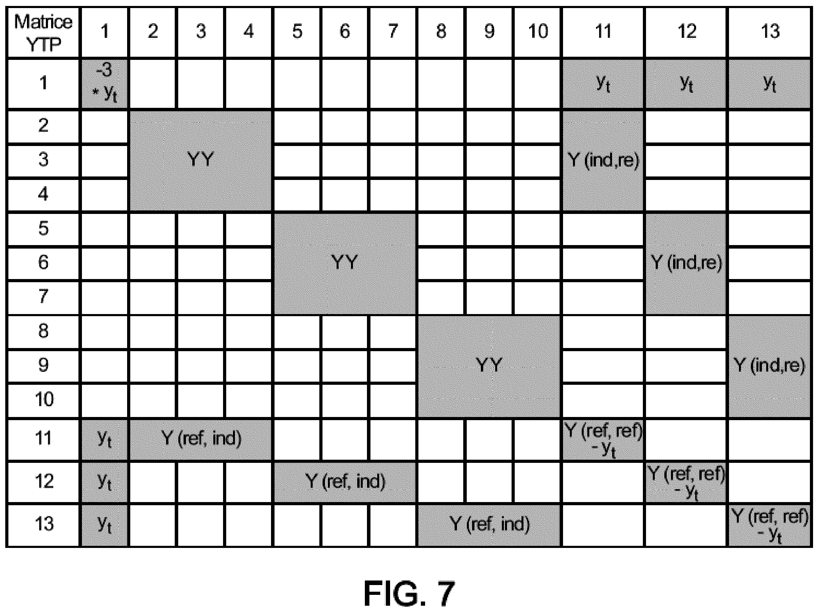

[Fig. 7] montre la construction d'une matrice d'admittance d'une branche basse tension BT triphasée prenant en compte les pertes du transformateur HTA/BT.
**Fig. 8**

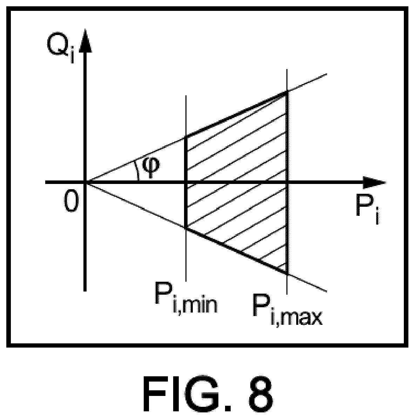

[Fig. 8] montre un domaine d'ajustement convexe des puissances active et réactive d'une installation.
**Fig. 9A**

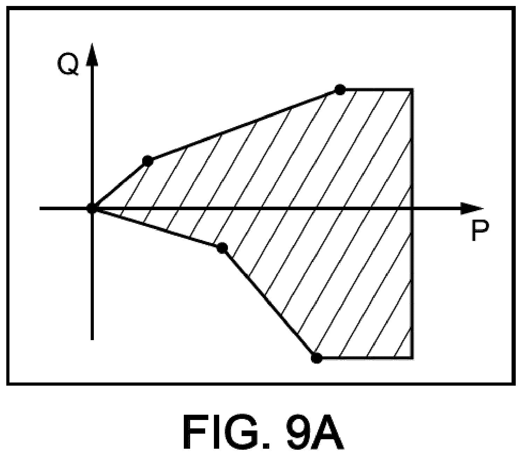

[Fig. 9A] montre un domaine d'ajustement non convexe des puissances active et réactive d'une installation.
**Fig. 9B**

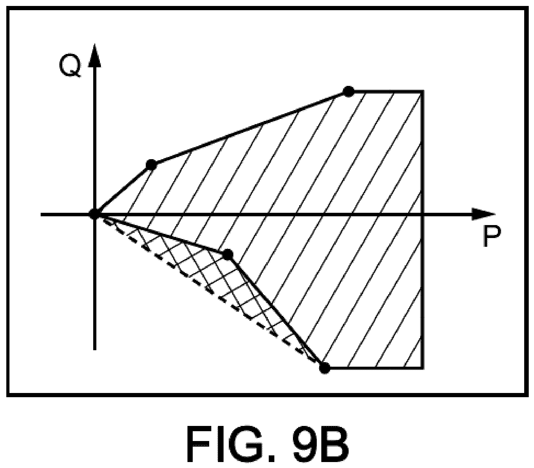

[Fig. 9B] montre la convexification du domaine d'ajustement de la figure 9A.
**Fig. 9C**

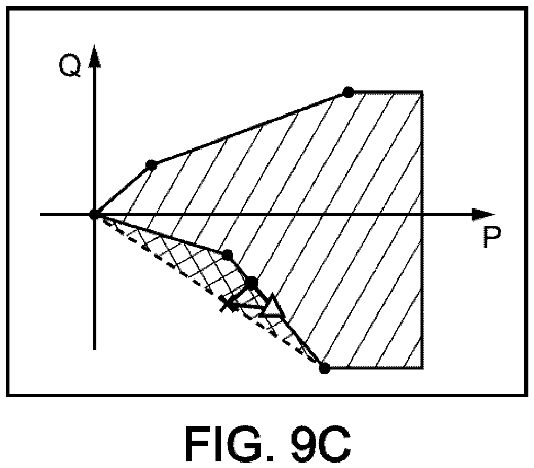

[Fig. 9C] montre l'obtention d'une solution pour les domaines illustrés aux figures 9A et 9B.
**Fig. 10**

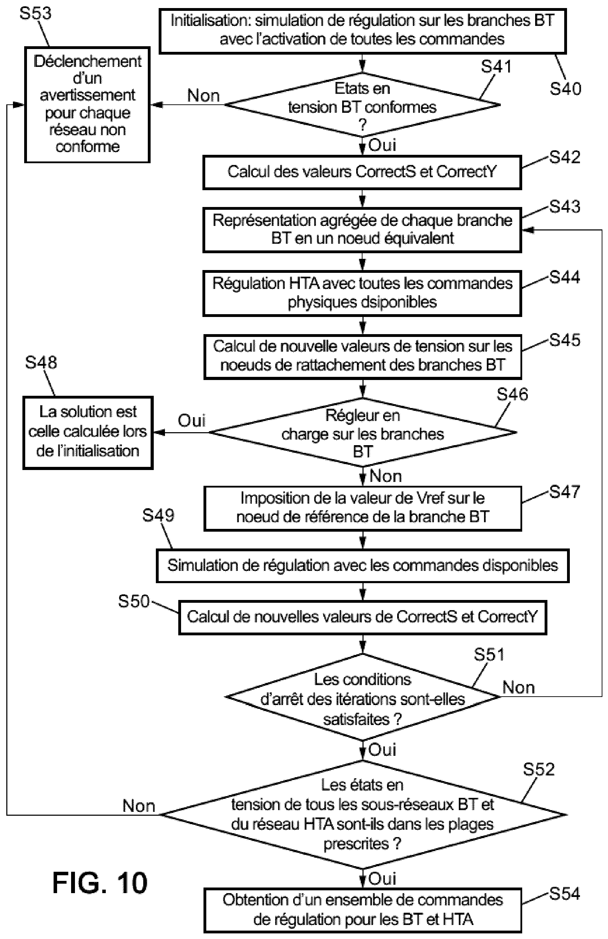

[Fig. 10] montre des étapes permettant l'obtention d'un ensemble de commandes de régulation pour les branches basse tension BT et la branche moyenne tension HTA.
**Fig. 11**

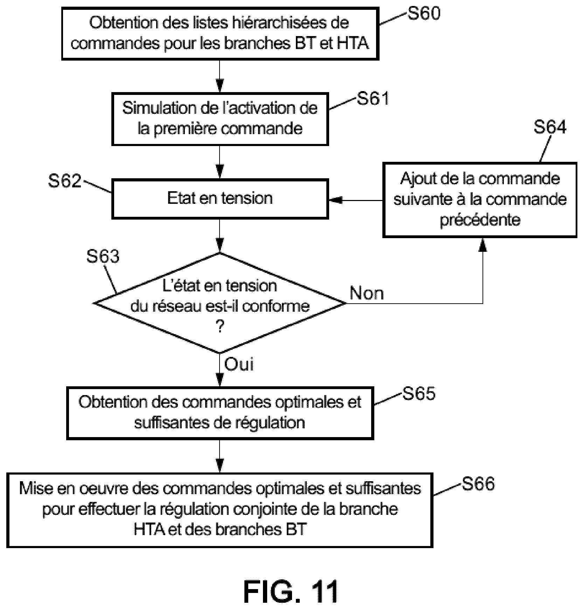

[Fig. 11] montre des étapes permettant l'obtention des commandes optimales et suffisantes de régulation conjointe.
**Fig. 12**

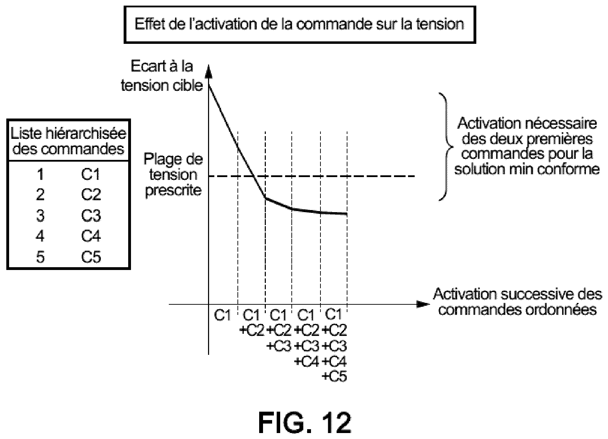

[Fig. 12] illustre les effets des étapes illustrées sur la figure 11.
**Fig. 13A**

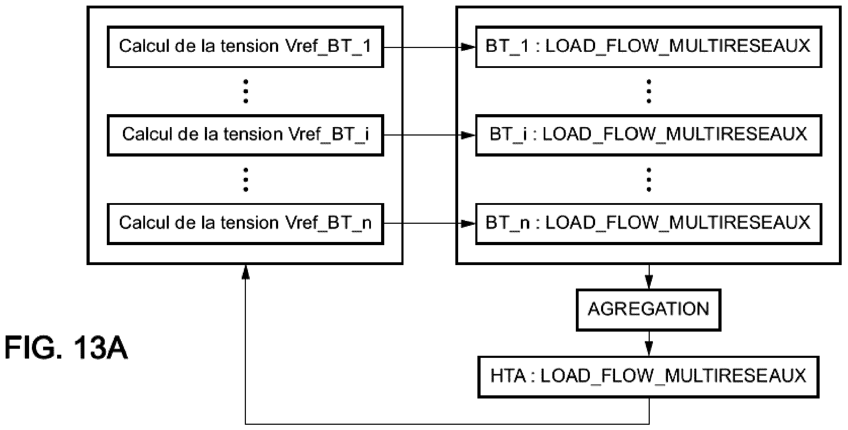

[Fig. 13A] illustre un exemple d'architecture monocœur d'une machine sur laquelle le procédé est mis en œuvre.
**Fig. 13B**

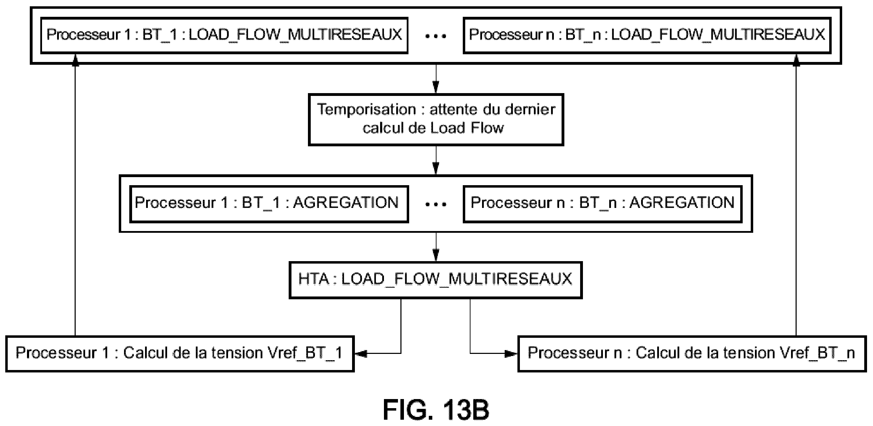

[Fig. 13B] illustre un exemple d'architecture multicœurs d'une machine sur laquelle le procédé est mis en œuvre.
**Fig. 14**

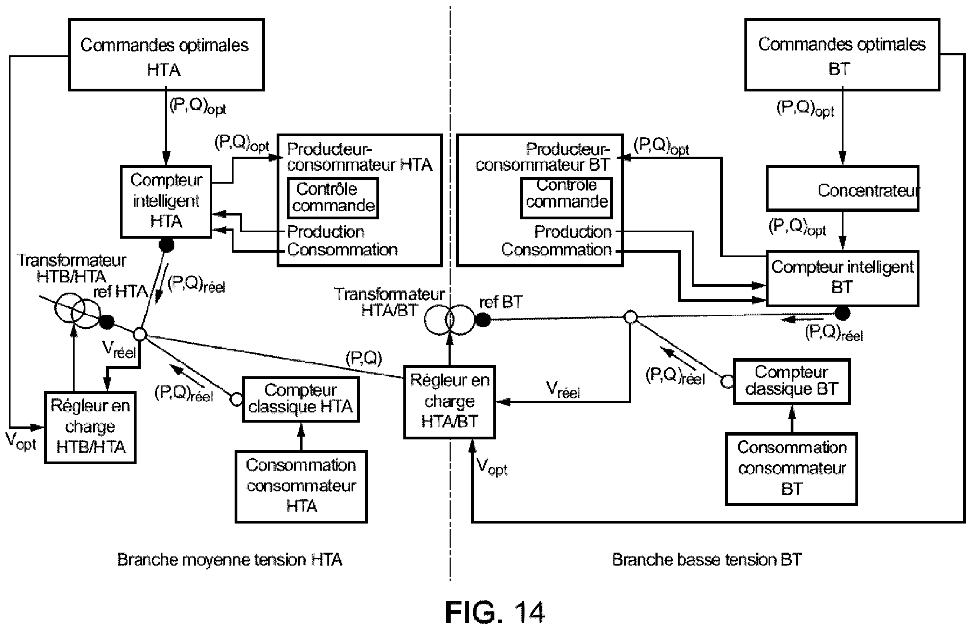

[Fig. 14] montre un exemple d'application des commandes de régulation conjointe sur un réseau de distribution schématisé selon une réalisation.

**Description des modes de réalisation**

La figure 1 illustre un exemple de configuration d'un réseau de distribution d'électricité.

Le réseau de distribution peut comprendre une branche moyenne tension HTA, rattachée à et alimentée par une branche haute tension HTB au niveau d'un transformateur HTB/HTA pouvant comprendre des régleurs en charges. La branche moyenne tension comprend une pluralité de nœuds commandables et/ou non-commandables. La branche moyenne tension comprend en outre un nœud de référence et au moins un nœud de rattachement auquel est rattachée au moins une branche basse tension, et de préférence une pluralité de branches basse tension.

Dans l'exemple non limitatif de la figure 1, le réseau de distribution comprend deux branches basse tension BTr, avec r l'indice de la branche basse tension où, ici, r = 1 et r= 2. Chaque branche basse tension comprend une pluralité de nœuds commandables et/ou non-commandables ainsi qu'un nœud de référence et un nœud de rattachement à la branche moyenne tension HTA.

Plusieurs branches basse tension BT peuvent être rattachées au niveau du même nœud de rattachement à la branche moyenne tension HTA.

Tous les nœuds commandables et non-commandables sont soumis à des injections et/ou soutirages d'électricité, influant directement sur l'état en tension général du réseau de distribution mais aussi sur l'état en tension local de chaque branche basse tension et/ou moyenne tension.

Le procédé de régulation décrit ci-après s'applique, de manière avantageuse, à tout type de réseau de distribution, quelle que soit sa topologie arborescente, par exemple en zone urbaine, semi-rurale ou rurale.

De plus, le procédé de régulation s'applique, avantageusement, à toute branche moyenne tension triphasé équilibré, pouvant être modélisé par un schéma dit « monophasé équivalent », et aux branches basse tension BT monophasées, triphasées équilibrées et/ou triphasées déséquilibrées.

Également, le procédé de régulation permet de couvrir tous les types de matériels d'injection de puissance raccordable au réseau de distribution moyenne et basse tension, en particulier des générateurs d'électricité d'origine renouvelable ou pas, comprenant des éoliennes, des hydroliennes, du photovoltaïque, de la biomasse, de la cogénération, de l'hydraulique. Le procédé de régulation couvre également tous les types de soutirages possibles sur un réseau de distribution moyenne et basse tension, comprenant notamment la consommation usuelle ou encore la climatisation et la recharge de véhicules électriques. Le procédé couvre également tous les systèmes pouvant soit injecter, soit soutirer dans le réseau, tels que des systèmes de stockage, comprenant des batteries, y compris des batteries de véhicules électriques et des volants d'inerties. Enfin, le procédé couvre également tous les types d'usagers, tels que des consommateurs monophasés non-commandables, des consommateurs monophasés commandables, des consommateurs triphasés non-commandables, des consommateurs triphasés commandables, des producteurs monophasés non-commandables, des producteurs triphasés non-commandables, des producteurs monophasés commandables et des producteurs triphasés commandables.

La figure 2 illustre certaines des principales étapes d'un procédé de régulation conjointe de la tension dans une branche moyenne tension HTA et la pluralité de branches basse tension BT, dont au moins une branche basse tension est triphasée.

Plus précisément, le procédé de régulation conjointe de la tension vise à maintenir la tension en chaque nœud du réseau composé d'une branche moyenne tension HTA et de ses branches basse tension dans des plages de tension prescrites. Les plages de tension prescrites peuvent être choisies selon tout critère. Le procédé proposé s'applique quelles que soient les valeurs des plages de tension prescrites.

Typiquement, en France, pour les branches moyenne tension HTA, la tension cible à maintenir peut être égale à 20 kV, tandis que pour les branches basse tension BT, la tension cible peut typiquement être égale à 230 V. Toutefois, ces valeurs sont données à titre informatif car d'autres valeurs de tensions cibles peuvent être définies contractuellement pour chaque utilisateur du réseau de distribution. De même, ces valeurs peuvent varier d'un pays à l'autre.

De plus, il est possible de traiter des tensions contractuelles différentes chez les usagers, entraînant ainsi des valeurs différentes de tension cible pour certains des nœuds.

La tension cible ne pouvant pas toujours être atteinte exactement, un pourcentage de déviation à respecter peut être établi.

Par exemple, le pourcentage de déviation peut être de l'ordre de +10% et - 10% autour de la valeur de la tension cible pour les branches basse tension BT. Ces valeurs sont données sont données à titre d'exemple non limitatif. Ces valeurs peuvent varier d'un pays à l'autre.

De même, le pourcentage de déviation peut être de l'ordre de +5% et -5% autour de la valeur de la tension cible pour la branche moyenne tension HTA. Ces valeurs sont données à titre d'exemple non limitatif. Ces valeurs peuvent varier d'un pays à l'autre.

Les pourcentages de déviation peuvent être choisis pour être plus ou moins grands que les exemples présentés ci-dessus. Les pourcentages de déviation peuvent même, éventuellement, avoir une valeur sensiblement égale à zéro.

Les pourcentages de déviation autour de la tension cible correspondent aux plages de tensions prescrites.

A l'étape S1, les données fixes relatives à chaque branche basse tension BT rattachée à la branche moyenne tension HTA sont collectées, ainsi que les données fixes relatives à la branche moyenne tension HTA.

Concernant les branches basse tension BT monophasées, les données fixes comprennent notamment les valeurs cibles de la tension aux nœuds de chaque branche basse tension. Ces valeurs sont réelles et positives. Ce sont les valeurs idéales des modules des tensions aux nœuds, qu'il s'agit d'atteindre par la régulation. Ces valeurs sont sous la forme d'un vecteur Vcible, de dimension égale au nombre de nœuds. Cela correspond à l'état en tension cible.

Dans la suite de la description, les termes « tension cible BT » ou « vecteur de tensions cibles BT » sont utilisés indifféremment pour faire référence au vecteur de tensions cibles correspondant aux valeurs de la tension cible de chaque branche basse tension.

Les données fixes comprennent également une matrice d'admittance Y de chaque branche basse tension et le nœud de référence, le nœud « slack bus » en anglais », de chaque branche basse tension. Le nœud de référence est le nœud de jonction de la branche basse tension BT à la branche moyenne tension HTA et est désigné par la référence « ref ».

Les données fixes comprennent également la liste des indices des nœuds dits « commandables ». Ces nœuds commandables sont les nœuds sur lesquels la régulation peut être effectuée depuis le concentrateur du réseau de distribution BT. Ces nœuds commandables peuvent être situés au niveau d'un compteur intelligent.

Au contraire, les nœuds non commandables sont des nœuds auxquels le procédé de régulation ne peut être appliqué. Ces nœuds non commandables peuvent être situés au niveau d'un compteur électrique classique ou intelligent.

En outre, selon un mode de réalisation, les données fixes comprennent, pour chaque nœud commandable de chaque branche basse tension, les domaines fixes de variation permis pour les couples de puissances actives et réactives correspondant aux nœuds commandables. Les puissances active et réactive sont comptées positivement s'il y a injection et négativement s'il y a soutirage.

Pour chaque nœud commandable, une description des plages de variations admissible, peut être fournie. Par exemple, la description peut prendre la forme d'un diagramme ou encore par une liste des points extrêmes du domaine.

En variante, le diagramme illustrant les plages de variations autorisées des puissances actives Pi et des puissances réactives Qi aux nœuds commandables est variable dans le temps. Notamment, comme cela sera décrit ci-après, le procédé peut être mis en œuvre à chaque pas d'un temps défini, par exemple toutes les 10 minutes. Ainsi, si les domaines sont variables dans le temps à un pas de temps inférieur au pas de temps de mise en œuvre du procédé, la collecte des données décrivant les domaines de variations autorisées des puissances actives Pi et des puissances réactives Qi est effectuée lors de la collecte des données variables, tel que décrit ci-après.

Les commandes de régulation disponibles au nœud de référence et aux nœuds commandables de la branche basse tension BT sont obtenues. Ces commandes de régulation dépendent du matériel installé et des modalités des contrats de raccordement. Les commandes de régulation comprennent le réglage de la tension de consigne pour régler la tension au secondaire du transformateur HTA/BT auquel est rattaché la branche basse tension BT, l'ajustement de la puissance active, l'ajustement de la puissance réactive, et/ou l'ajustement des puissance active et réactive. Cela s'applique au cas où il existe un régleur en charge du transformateur HTA/BT.

Enfin, les données fixes comprennent une liste fixée des commandes disponibles, hiérarchisée par ordre décroissant de mise en œuvre souhaitée. Eventuellement, cette liste peut varier dans le temps, et donc être une donnée variable, afin de répondre aux exigences contractuelles et/ou matérielles.

La liste peut être obtenue au moyen d'un algorithme, ou peut être issue d'un choix du gestionnaire du réseau.

Concernant les branches basse tension BT triphasée, les données fixes collectées comprennent la liste des nœuds de la branche basse tension BT triphasée considérée.

Les données fixes comprennent également la matrice d'admittance Y décrivant le comportement électrique de chacune des trois phases, les trois phases ayant une matrice d'admittance identique.

Les données fixes comprennent en outre la valeur du rapport de transformation entre le module de la tension au nœud de la branche moyenne tension HTA auquel la branche basse tension BT triphasée est raccordée, ainsi que la valeur commune des modules des tensions sur chacune des trois sorties du transformateur HTA/BT. La valeur commune de la tension peut être déduite de la tension au nœud de rattachement de la branche basse tension BT triphasée à la branche moyenne tension HTA en appliquant un rapport de transformation.

Dans une réalisation, le transformateur HTA/BT peut être supposé parfait.

Pour plus de réalisme, les pertes du transformateur HTA/BT peuvent être prises en compte en considérant qu'une admittance yp connue et donnée est insérée entre chaque sortie du transformateur supposé parfait et à chaque départ de phase au nœud de référence de la branche basse tension BT.

L'exemple présenté ci-après, ainsi que la figure 7 illustrent le cas où les pertes du transformateur sont prises en compte.

Pour chacune des trois phases de la branche basse tension BT triphasée, sont collectées :

- la liste des nœuds non-commandables correspondant aux consommateurs et/ou producteurs opérant en monophasé et connectés à la phase considérée, où pour chacun de ces nœuds, les puissances active et réactive injectées et/ou soutirées sont supposées données,
- la liste des nœuds commandables correspondant aux consommateurs et/ou producteurs opérant en monophasé sur la phase considérée,
- la liste des nœuds non-commandables correspondant aux consommateurs et/ou producteurs opérant en triphasé, où pour chacun de ces nœuds, les puissances active et réactive injectées et/ou soutirées sont supposées données,
- la liste des nœuds commandables correspondant aux consommateurs et/ou producteurs opérant en triphasé sur la phase considérée.

Les commandes de régulation disponibles aux nœuds commandables triphasés sont les mêmes que celles disponibles pour les nœuds commandables des branches basse tension BT monophasées et dépendent des caractéristiques techniques du nœud considéré de la branche basse tension BT triphasée.

Une liste fixe de commandes disponibles et hiérarchisée par ordre décroissant de mise en œuvre souhaitée est collectée. Si la liste varie dans le temps, elle peut être collectée avec les données variables.

La liste peut être obtenue au moyen d'un algorithme, ou peut être issue d'un choix du gestionnaire du réseau.

Enfin, les domaines fixes de variation permis pour les couples de puissances active et réactive correspondant aux nœuds commandables sont collectés. Les puissances active et réactive sont comptées positivement s'il y a injection et négativement s'il y a soutirage.

Pour chaque nœud commandable, une description des plages de variations admissibles des puissances active et réactive, sous la forme d'un diagramme, peut être fourni. Le même domaine de variation pour les couples de puissances active et réactive est associé à chaque phase de la branche basse tension BT triphasée.

En variante, le diagramme illustrant les plages de variations autorisées des puissances actives Pi et des puissances réactives Qi aux nœuds commandables est variable dans le temps. Notamment, comme cela sera décrit ci-après, le procédé peut être mis en œuvre à chaque pas d'un temps défini, par exemple toutes les 10 minutes. Ainsi, si les domaines sont variables dans le temps à un pas de temps inférieur au pas de temps de mise en œuvre du procédé, la collecte des données décrivant les domaines de variations autorisées des puissances actives Pi et des puissances réactives Qi est effectuée lors de la collecte des données variables, tel que décrit ci-après.

Les données fixes pour la branche moyenne tension HTA comprennent notamment les valeurs cibles de la tension aux nœuds de la branche moyenne tension. Ces valeurs sont réelles et positives. Ce sont les valeurs idéales des modules des tensions aux nœuds, qu'il s'agit d'atteindre par la régulation. Ces valeurs sont sous la forme d'un vecteur, de dimension égale au nombre de nœuds.

Dans la suite de la description, les termes « tension cible HTA » ou « vecteur de tensions cibles HTA » sont utilisés indifféremment pour faire référence au vecteur de tensions cibles correspondant à l'état en tension cible de la branche moyenne tension.

Par ailleurs, la matrice d'admittance de la branche moyenne tension HTA et le nœud de référence de la branche moyenne tension HTA sont collectés.

La liste des indices des nœuds commandables est également collectée. Ces nœuds commandables sont des nœuds sur lesquels la régulation peut être effectuée depuis le site où sont installés les matériels servant à la régulation de la branche moyenne tension HTA.

Pour chaque branche moyenne et basse tension HTA BT, les nœuds sont identifiés par des numéros. Les numérotations sont indépendantes dans les différentes branches. Ainsi, la correspondance entre l'indice de chaque nœud de référence des branches BT et l'indice du nœud de la branche HTA auquel chaque branche BT est rattachée est également collectée.

Les pertes du transformateur HTB/HTA sont également collectées. Elles peuvent être représentées par un élément série d'admittance qui peut être fourni directement.

Les commandes de régulation disponibles au nœud de référence et aux nœuds commandables de la branche moyenne tension HTA sont également collectées. Les commandes de régulation peuvent dépendre du matériel installé et/ou des modalités des contrats de raccordement.

Enfin, les domaines fixes de variation permis pour les couples de puissances active Pi et réactive Qi correspondant aux nœuds commandables de la branche moyenne tension HTA peuvent être collectés. En variante, les couples de puissances actives et réactives sont variables dans le temps et sont collectées durant les étapes S2 et S3 de collecte des données variables.

Les commandes de régulation comprennent le réglage de la tension de consigne du régleur en charge du transformateur HTA/BT, lorsque ce réglage existe sur le transformateur, l'ajustement de la puissance active, l'ajustement de la puissance réactive, et/ou l'ajustement des puissance active et réactive.

Avantageusement, les étapes S2 à S12 du procédé illustré sur la figure 2 sont mises en œuvre à chaque pas d'un temps prédéterminé.

Par exemple, le pas de temps est égal à 10 minutes. Le pas de temps de 10 minutes peut notamment être choisi conformément à la norme CEI 61000-4-30 en vigueur sur le territoire français.

Le pas de temps pour être choisi et modifié en fonction des besoins relatifs au réseau de distribution considéré.

A l'étape S2, les données variables relatives aux branches basse tension BT sont collectées. Les données variables des branches basse tension BT monophasées et triphasées sont les mêmes.

Pour chaque branche basse tension BT, outre le diagramme illustrant les plages de variations autorisées des puissances actives Pi et des puissances réactives Qi aux nœuds commandables si celui-ci est variable dans le temps, les données variables peuvent comprendre les puissances actives Pi et réactives Qi injectées ou soutirées en chaque nœud de la branche basse tension BT. Ces valeurs peuvent être transmises au concentrateur au moyen d'un compteur intelligent, par exemple en courant porteur en ligne. En parallèle, une mesure de tension peut être faite au niveau de postes de distribution par le concentrateur.

En variante, un modèle d'estimation de charge ou profil de production et/ou de consommation peut être utilisé pour déterminer les puissances actives et réactives produites.

Peut également être collectée la liste des commandes disponibles, hiérarchisée par ordre décroissant de mise en œuvre souhaitée, si cette liste est variable dans le temps.

La liste peut être obtenue au moyen d'un algorithme, ou peut être issue d'un choix du gestionnaire du réseau.

Les données variables relatives à la branche moyenne tension HTA sont collectées à l'étape S3.

Les données variables, outre le diagramme illustrant les plages de variations autorisées des puissances actives Pi et des puissances réactives Qi aux nœuds commandables si celui-ci est variable dans le temps, comprennent les valeurs des puissances actives Pi et réactives Qi injectées ou soutirées en chaque nœud de la branche moyenne tension HTA. Ces valeurs peuvent être transmises au concentrateur au moyen d'un compteur électronique ou numérique fournissant les valeurs de consommation et de production électrique.

Peut également être collectée la liste des commandes disponibles, hiérarchisée par ordre décroissant de mise en œuvre souhaitée, si cette liste est variable dans le temps.

La liste peut être obtenue au moyen d'un algorithme, ou peut être issue d'un choix du gestionnaire du réseau.

A partir des données fixes et variables, l'état en tension du réseau est déterminé à l'étape S4.

Plus précisément, l'état en tension de chaque branche basse tension et l'état en tension de la branche moyenne tension sont déterminés. Cette étape est décrite plus en détail en référence à la figure 5. Typiquement, l'état en tension de chaque branche basse tension et l'état en tension de la branche moyenne tension sont déterminés selon toute technique de résolution du système d'équations de Kirchhoff, autrement dit le problème du calcul de la répartition des charges, communément appelé problème du « load flow » permettant de déterminer en tout nœud du réseau la tension en connaissant les puissances injectées/soutirées en chacun des nœuds du réseau.

La détermination de l'état en tension de chaque branche basse tension BT permet d'obtenir un vecteur de tensions dites « effectives », illustrant l'état en tension effectif de chaque nœud de chaque branche basse tension. Par « tension effective », on entend la partie réelle de la tension complexe déterminée à un instant t dans un nœud d'une branche basse tension. Il s'agit donc d'un état réel de la tension en ce nœud et à cet instant t. Cet état réel en tension dans chaque branche basse tension est noté ci-après et éventuellement dans les références aux dessins « Vréel BT ».

Dans la suite de la description, les termes « tension effective BT » ou « vecteur de tensions effectives BT » sont utilisés indifféremment pour faire référence au vecteur de tensions effectives correspondant à l'état réel en tension de chaque branche basse tension, précité (Vréel BT).

De même, la détermination de l'état en tension de la branche moyenne tension HTA permet d'obtenir un vecteur de tensions dites « effectives », illustrant l'état en tension effectif de chaque nœud de la branche moyenne tension. Par « tension effective », on entend la partie réelle de la tension complexe déterminée à un instant t dans un nœud de la branche moyenne tension. Il s'agit donc d'un état réel de la tension en ce nœud et à cet instant t. Cet état réel en tension dans la branche moyenne tension est noté ci-après et éventuellement dans les références aux dessins « Vréel HTA ».

Dans la suite de la description, les termes « tension effective HTA » ou « vecteur de tensions effectives HTA » sont utilisés indifféremment pour faire référence au vecteur de tensions effectives correspondant à l'état réel en tension de la branche moyenne tension, précité (Vréel HTA).

A l'étape S5, il est vérifié si une régulation de la tension est nécessaire.

Pour cela, il est déterminé si l'état en tension effectif Vréel de chaque branche basse tension BT est bien compris dans une première plage de tension prescrite.

Pour déterminer si l'état en tension effectif Vréel BT est bien compris dans la première plage tension prescrite, les écarts entre la tension effective et la tension cible sont déterminés. Les écarts entre la tension effective et la tension cible sont les écarts en valeur absolue entre la tension cible Vcible et le module de la tension effective.

La figure 3 illustre des exemples de plages prescrites pour les branches basse tension BT.

De même pour la branche moyenne tension, il est déterminé si l'état en tension effectif Vréel HTA est bien compris dans une deuxième plage de tension prescrite.

La figure 4 illustre un exemple de plage de tension prescrite pour les branches basse tension HTA.

Si l'état en tension de chaque branche est compris dans les première et deuxième plages de tension prescrites définies respectivement pour les branches basse et moyenne tension, une régulation n'est pas nécessaire et le procédé attend le pas de temps suivant à l'étape S6, puis met à nouveau en œuvre l'étape S2.

Si l'état en tension d'au moins une branche basse tension BT et/ou de la branche moyenne tension HTA est en dehors, respectivement, de la première ou de la deuxième plage de tension prescrite, une régulation doit être mise en œuvre.

A l'étape S7, des valeurs de commandes de régulation sont séparément calculées pour la branche moyenne tension HTA et pour chaque branche basse tension BT. Ce calcul sera plus particulièrement décrit en référence à la figure 6.

Les valeurs de commandes de régulation seront ensuite utilisées pour la régulation conjointe de la branche moyenne tension HTA et des branches basse tension BT.

Puis, l'étape S8 comprend la vérification de l'existence d'une solution assurant le plus petit écart entre les tensions effectives et les tensions-cibles de la branche moyenne tension HTA et des branches basse tension BT.

Afin d'effectuer cette vérification, une simulation de régulation est effectuée, dans laquelle il est considéré qu'il n'existe pas de contraintes limitant l'utilisation effective de toutes les commandes de régulation possibles à chaque pas de temps de 10 minutes.

Ainsi, lors de cette simulation, toutes les commandes de régulation possibles sont activées, les commandes ayant comme valeurs les valeurs obtenues à l'étape S7.

Cette étape a la propriété de permettre de manière certaine qu'il n'existe pas de solution dans laquelle l'écart à la tension cible pourrait être réduit dans une des branches HTA ou BT sans augmenter l'écart à la tension cible dans une autre branche.

Autrement dit, si, suite à cette simulation, les états en tension des branches HTA et BT entrent dans leur plage de tension prescrite respective, il est assuré qu'il existe bien une solution permettant la régulation conjointe du réseau de distribution.

En revanche, si, suite à cette simulation, les états en tension d'au moins une des branches HTA et BT n'entre pas dans leur plage de tension prescrite respective, il est assuré qu'il n'existe pas une solution permettant la régulation conjointe du réseau de distribution au pas de temps considéré.

Durant l'étape S9 il est déterminé si une telle solution existe.

Dans la suite de la description, cette solution est appelée « ensemble de commandes de régulation conjointe » ou encore « ensemble des commandes de régulation possibles » ou « ensemble des commandes possibles ». Cette solution regroupe toutes les valeurs commandes de régulation possibles, les valeurs ayant été calculées durant l'étape S7.

L'ensemble des commandes possibles comprend la valeur de la tension au nœud de référence des branches qui correspond à la valeur de consigne de la tension à donner au régleur en charge du transformateur HTA/BT, l'ajustement de la puissance active, l'ajustement de la puissance réactive et l'ajustement des puissances active et réactive.

Si ce n'est pas le cas, une alarme est déclenchée à l'étape S10.

A l'étape S11, le procédé continue vers la sélection de commandes suffisantes permettant la régulation conjointe effective du réseau de distribution.

La solution identifiée lors de l'étape S8 permet d'assurer le plus petit écart entre l'état en tension effectif et l'état en tension cible pour les branches HTA et BT.

Cette solution comprend l'activation de toutes les commandes possibles. Toutefois, l'utilisation de toutes les commandes possibles peut être soumise à des contraintes, liées au réseau ou contractuelles ou encore à la disponibilité du matériel. Il s'agit donc de construire une solution de régulation conforme en tension comprenant le nombre minimum et suffisant de commandes de régulation à mettre effectivement en œuvre lors de l'étape de régulation de la tension pour que la tension en tout nœud du réseau soit conforme à la plage prescrite.

Dans la suite de la description, la solution de régulation est appelée « ensemble de commandes de régulation optimales» ou « ensemble de commandes optimales » ou encore « commandes optimales ».

Dans certains cas, il n'existe pas de contraintes particulièrement à la mise en œuvre de commandes, de sorte que l'étape S11 peut être facultative et que toutes les commandes possibles déterminées à l'étape S9 peuvent être effectivement mises en œuvre pour la régulation conjointe de la tension.

Le choix de l'ensemble des commandes optimal pour la régulation est basé sur les listes de commandes hiérarchisée par ordre décroissant de préférence de mise en œuvre. Les listes hiérarchisées sont supposées données, soit en tant que donnée variable obtenue à chaque pas du temps de mise en œuvre, soit comme donnée fixe, pour la branche moyenne tension HTA et les branches basse tension BT.

Une fois les commandes optimales choisies, elles sont mises en œuvre conjointement pour la régulation conjointe de la tension des branches HTA et BT à l'étape S12.

En référence à la figure 5, il est maintenant décrit plus en détails les calculs de l'état en tension effective de la branche moyenne tension HTA et des branches basse tension BT.

La détermination de l'état en tension de la branche moyenne tension HTA et des branches basse tension BT est effectuée de manière itérative jusqu'à ce qu'un critère d'arrêt soit satisfait. Le critère d'arrêt peut notamment être un nombre d'itérations maximum, typiquement deux ou trois itérations, ou encore une faible différence entre les résultats obtenus entre deux itérations successives.

La détermination de l'état en tension de la branche moyenne tension HTA seule, ou d'une branche basse tension BT seule, peut être effectuée par la résolution du problème dit du « load flow », c'est-à-dire en résolvant le système d'équations de Kirchhoff permettant de calculer en tout nœud du réseau la tension en connaissant la tension au nœud de référence et la puissance injectée/soutirée en chaque nœud. L'état en tension de la branche moyenne tension HTA seule, ou d'une branche basse tension BT seule peut être déterminé par toute technique de résolution du « load flow » dont un exemple, non limitatif, est décrit ci-après.

Dans le cadre de la régulation conjointe d'une branche moyenne tension HTA et des branches basse tension BT qui lui sont rattachées, il peut être intéressant de tenir compte des interactions électriques entre la branche moyenne tension HTA et les branches basse tension BT.

Ainsi, dans une réalisation, l'état en tension est déterminé pour chaque branche basse tension BT, puis les données relatives à chaque branche basse tension BT sont agrégées en un nœud équivalent représentant la puissance en ce nœud vue de la branche moyenne tension HTA.

Ainsi agrégées, les puissances sur tous les nœuds de la branche moyenne tension HTA sont connues et il est possible de déterminer l'état en tension selon toute technique de résolution du problème de « load flow » en tenant compte des interactions entre les branches basse tension BT et la branche moyenne tension HTA.

Dans un premier temps, l'état en tension de chaque branche basse tension BT seule est déterminé à l'étape S20, par toute technique de résolution du problème de « load flow », et en prenant comme tension au nœud de référence de la branche basse tension BT la tension imposée au nœud de référence de la branche moyenne tension HTA en prenant en compte les rapports du transformateur HTA/BT.

Puis aux étapes S21 et S22, les données relatives à chaque branche basse tension BT sont agrégées en leur nœud de rattachement à la branche moyenne tension HTA.

De manière générale, les données relatives à chaque branche basse tension BT sont agrégées au niveau d'un nœud de rattachement de la branche basse tension BT considérée à la branche moyenne tension HTA en calculant un couple de valeurs de puissances active et réactive de la branche basse tension considérée, chaque couple de puissances active et réactive étant respectivement ajouté aux valeurs de puissances active et réactive aux nœuds de rattachement de la branche BT à la branche HTA, et en corrigeant le terme diagonal de la matrice d'admittance de la branche moyenne tension HTA correspondant au nœud de rattachement de la branche BT considérée à la branche moyenne tension HTA.

De manière plus précise, considérant un réseau de distribution comprenant une branche moyenne tension HTA à laquelle est rattachée une branche basse tension BT, le réseau de distribution peut être décrit par :

la matrice d'admittance $Y_a$ de la branche moyenne tension HTA avec le nœud d'indice *ref* comme nœud de référence ;
la matrice d'admittance $Y_b$ de la branche basse tension BT avec le nœud d'indice 1 comme nœud de référence (cet indice est donné à titre indicatif) ;
le nœud de rattachement entre la branche basse tension et moyenne tension HTA, ici par exemple le nœud 1 peut être rattaché à tout nœud *r* de la branche moyenne tension HTA, r étant différent de *ref* ;
le vecteur de puissances complexes $S_a$ injectées/soutirées en tous nœuds de la branche moyenne tension HTA ;
le vecteur de puissances complexes $S_b$ injectées/soutirées en tous nœuds de la branche basse tension BT.

Considérant la branche moyenne tension HTA seule, l'état en tension $V_a$ de la branche HTA peut être déterminé comme étant solution du système de Kirchhoff suivant.

$$S_a^* = diag(V_a^*) \cdot Y_a \cdot V_a \quad (1)$$

Où le signe « * » indique la conjugaison complexe.

Lorsqu'une branche basse tension est rattachée à la branche moyenne tension HTA, du fait des injections/-soutirages, décrits par le vecteur $S_b$, dans la branche basse tension, l'état en tension de la branche moyenne tension est modifié et devient $\tilde{V}_a$.

L'état en tension $\tilde{V}_a$ peut ainsi être considéré comme résolvant un système d'équations de Kirchhoff, différent de la formule (3) mais pouvant en être déduit directement en ajoutant :

au terme diagonal de la matrice $Y_a$ un terme correctif noté correct $Y_a(r,r)$
à la composante *r* du vecteur $S_a$ un terme correctif noté correct $S_a(r)$.

Les termes correctifs ci-dessous forment une représentation agrégée de l'influence de la branche basse tension sur la branche moyenne tension HTA, au niveau de son nœud de rattachement *r*.

Plus précisément, les termes correctifs peuvent s'écrire de la manière suivante :

$$correct Y_a(r,r) = Y_b(1,1) - Y_b(1,K) \cdot \left(Y_b(K,K)\right)^{-1} \cdot Y_b(K,1) \quad (2)$$

$$correct S_a = -V_b^*(1) \cdot Y_b(1,K) \cdot \left(Y_b(K,K)\right)^{-1} \cdot \left(diag\left(V_b^*(K)\right)\right)^{-1} \cdot S_b^*(K) \quad (3)$$

avec *nb* le nombre de nœud de la branche BT, *K* le sous-ensemble d'indices correspondant au *nb-1* nœuds de la branche basse tension BT autres que le nœud de référence, *Sb(K)* le vecteur des puissances complexes injectées/soutirées aux nœuds de la branche autres que le nœud de référence, $V_b$ le vecteur des tensions complexes aux nœuds de la branche basse tension BT, $V_b(K)$ le vecteur de taille *nb -1* obtenu en supprimant la première composante de $V_b$, Yb(1, K) le vecteur-ligne déduit de la première ligne de la matrice d'admittance Yb après suppression de la première composante, $Y_b^*(1, K)$ le vecteur-ligne complexe conjugué de $Y_b(1, K)$, $Y_b(K, K)$ la sous-matrice Yb obtenu en supprimant la première ligne et la première colonne de $Y_b$, $Y_b(K, K)$ étant une matrice inversible avec son inverse noté $Y_b(K, K)^{-1}$ et $Y_b^*(K, K)$ la matrice conjuguée de $Y_b(K, K)$.

Pour le cas où plus d'une branche basse tension BT est rattachée à la branche moyenne tension, les formules (2) et (3) peuvent être appliquées simultanément à toutes les branches basse tension rattachées à la branche moyenne tension, de sorte que chacun des termes diagonaux de la matrice d'admittance de la branche moyenne tension HTA correspondant à un nœud de rattachement à une branche basse tension BT soient corrigés, et chaque composante du vecteur de puissances Sa correspondant à un nœud de rattachement à une branche basse tension BT soient corrigées.

Puis, à l'étape S23, l'état en tension de la branche moyenne tension HTA est déterminé en utilisant la tension imposée au nœud de référence de la branche moyenne tension HTA comme valeur d'initialisation et en tenant compte des données agrégées des branches basse tension BT.

L'état en tension de la branche moyenne tension HTA est déterminé par la résolution du problème de « load flow », par toute technique de résolution connue.

A l'étape S24, de nouvelles valeurs de tension aux nœuds de rattachement des branches basse tension BT à la branche moyenne tension HTA sont obtenues, à partir de l'état en tension de la branche moyenne tension HTA déterminé à l'étape précédente.

A l'étape S25, la valeur de la tension au nœud de rattachement des branches basse tension BT à la branche moyenne tension HTA est imposée sur la valeur du nœud de référence, multipliée par le rapport de transformation HTA/BT, si il n'y a pas de régleur en charge au niveau du transformateur HTA/BT.

L'état en tension de chaque branche basse tension BT est alors à nouveau calculé à l'étape S26, par la résolution du problème de « load flow ».

De nouvelles valeurs des termes CorrectS et CorrectY sont alors obtenues (étape S27).

Il est ensuite déterminé à l'étape S28 si le critère d'arrêt est satisfait. S'il ne l'est pas, les étapes S22 à S28 sont à nouveau mises en œuvre. Si le critère d'arrêt est satisfait, l'état en tension effectif de la branche moyenne tension HTA et des branches basse tension BT est obtenu. Autrement dit, la tension est connue en chaque nœud de la branche moyenne tension HTA et des branches basse tension BT.

L'étape S7 de la figure 2, durant laquelle des commandes de régulation initiales de la branche moyenne tension HTA et de chaque branche basse tension BT sont calculées séparément, est décrite plus précisément en référence à la figure 6.

Concernant les branches basse tension BT triphasées, une étape supplémentaire est à effectuer en amont. Lors de cette étape, la matrice d'admittance de chaque branche basse tension BT triphasée rattachée à la branche moyenne tension HTA est construite en amont.

Dans un premier cas, la matrice d'admittance de chaque branche basse tension BT triphasée peut être construite en tenant compte des pertes liées au transformateur HTA/BT.

Dans ce premier cas, un nœud supplémentaire est ajouté à chaque phase de la branche basse tension BT triphasée, le nœud supplémentaire représentant la sortie d'un transformateur supposé parfait et de même rapport de transformation $\rho$ que le transformateur réel imparfait. Les trois nœuds supplémentaires ainsi introduits sont notés r1, r2 et r3. Chacun des trois nœuds est relié au nœud de référence de la branche basse tension BT correspondant à la phase associée par une branche formée par la mise en série d'une résistance R et d'une self-inductance L (de faibles valeurs), ce qui correspond à une admittance notée yt ($yt = 1/(R+jL\omega)$), l'indice t indiquant qu'il s'agit d'une admittance relative au transformateur.

Les valeurs de R et L sont des données qui sont déterminées de telle sorte que la différence entre les tensions complexes aux deux extrémités de cette branche est une bonne approximation des pertes et du déphasage induits par les imperfections du transformateur.

Par exemple, pour des transformateurs de puissance nominale entre 160 et 250 kVA, des valeurs typiques de R et de $L\omega$ sont dans les intervalles [8.e-3, 20.e-3] Ohm pour R et [25.e-3, 50.e-3] Henry-Ohm pour $L\omega$.

Puisque les modules des tensions en sortie des trois enroulements secondaires du transformateur supposé parfait sont les mêmes et égaux à $1/\rho$ fois le module de la tension du côté de la branche HTA, les trois nœuds r1, r2, r3 peuvent être regroupés en un seul nœud correspondant au nouveau nœud de référence de la branche basse tension BT triphasée, représentée sous une forme développée. Ce nouveau nœud est numéroté 1. Cette convention permet la construction de la matrice d'admittance triphasée en prenant en compte les pertes du transformateur.

La matrice d'admittance de chaque branche basse tension BT triphasée avec pertes sous sa forme développée est notée YTP et est composée par les données des trois phases et des pertes liées au transformateur. La matrice YTP est de taille (3n + 1, 3n + 1).

La liste des nœuds de la branche basse tension BT, autres que le nœud de référence *ref* est appelé *ind*.

Ainsi, pour conserver la même numérotation pour les 3n-2 nœuds communs, les trois nœuds correspondant aux trois nœuds de rattachement respectifs des trois phases sont numérotés 3n-1, 3n et 3n+1 respectivement. De cette façon, les trois lignes et colonnes correspondant à ces nœuds dans la matrice YTP sont les trois dernières lignes et les trois dernières colonnes.

Une numérotation des nœuds de la branche basse tension BT triphasée sous sa forme développée est choisie telle que :

Le premier nœud est le nœud de référence de la branche basse tension BT triphasée sous sa forme développée; ce nœud est le nœud de référence commun à chacune des trois phases;

Les nœuds autres que le nœud de référence *réf* correspondant à la première phase sont numérotés de 2 à n (dans l'ordre où ils apparaissent dans la liste des indices de nœuds *ind*) ;

Les nœuds autres que le nœud de référence *réf* correspondant à la deuxième phase sont numérotés de n+1 à 2n-1 (dans l'ordre où ils apparaissent dans la liste des indices de nœuds *ind*);

Les nœuds autres que le nœud de référence *réf* correspondant à la troisième phase sont numérotés de 2n à 3n-2 (dans l'ordre où ils apparaissent dans la liste des indices de nœuds *ind*);

Les trois nœuds correspondant aux trois nœuds de rattachement des trois phases sont numérotés 3n-1, 3n et 3n+1 respectivement. De cette façon, les trois lignes et colonnes correspondant à ces nœuds dans la matrice d'admittance YTP sont les trois dernières lignes et les trois dernières colonnes.

La matrice d'admittance YTP de la branche basse tension BT triphasée sous sa forme développée et en tenant compte des pertes est construite de la manière suivante :

Un premier terme égal à Y(réf, réf), suivi des n-1 termes de la ligne Y(réf, ind), suivis encore des n-1 termes de la ligne Y(réf, ind) , et suivis, enfin, des n-1 termes de la ligne Y(ref,ind).

La première colonne de la matrice d'admittance YTP est construite de façon analogue, en concaténant 3 fois la colonne Y(ind, réf) à la suite du terme diagonal Y(1,1).

La première ligne a pour coefficients non nuls : YTP(1,1) = -3*yt ; YTP(1, 3*n-1) = yt ; YTP(1, 3*n) = yt ; YTP(1, 3*n+1) = yt ;

La première colonne est la transposée de la première ligne : YTP(:,1) = (YTP(1,:))' ;

La sous-matrice de YTP formée par les lignes et les colonnes numérotées de 2 à 3*n-2, est la même que la sous-matrice de YTP formée par les lignes et les colonnes numérotées de 2 à 3*n-2 : YTP(2:3*n-2, 2:3*n-2) = YT(2:3*n-2, 2:3*n-2);

La ligne 3n-1 a pour coefficients non nuls : YTP(3*n-1,1) = yt ;

YTP(3*n-1,3*n-1) = Y(réf, réf)-yt ; YTP(3*n-1, 2:n) = Y(ref,ind)

La colonne 3n-1 a pour coefficients non nuls : YTP(1,3*n-1) = yt ;

YTP(2:n,3*n-1) = Y(ind,ref);

(Y(ind, réf) désigne la colonne de Y correspondant au nœud réf, privée de sa composante réf)

La ligne 3n a pour coefficients non nuls: YTP(3*n,1) = yt ;

YTP(3*n,3*n) = Y(réf, réf)-yt ; YTP(3*n, n+1:2*n) = Y(ref,ind) ; où Y(ref,ind) désigne la ligne de Y correspondant au nœud de référence réf, privée de la composante réf). La colonne 3n a pour coefficients non nuls: YTP(1,3*n) = yt ;

YTP(n+1:2*n,3*n) = Y(ind,ref);

La ligne 3n+1 a pour coefficients non nuls: YTP(3*n,1) = yt ;

YTP(3*n,3*n) = Y(réf, réf)-yt ; YTP(3*n, n+1:2*n) = Y(ref,ind) ;

La colonne 3n+1 a pour coefficients non nuls: YTP(1,3*n) = yt ;

YTP(n+1:2*n,3*n) = Y(ind,ref);.

La matrice d'admittance YTP d'une branche basse tension BT triphasée sous sa forme développée, en tenant compte des pertes, ainsi construite est présentée à la figure 7.

En d'autres termes, pour construire la matrice d'admittance YTP d'une branche basse tension BT triphasée sous sa forme développée en tenant compte des pertes liées au transformateur HTA/BT, la liste de tous les nœuds de la branche basse tension BT est obtenue. Puis, une nouvelle liste de nœuds est créée en considérant que chaque nœud de la branche basse tension BT est triplé, un nœud par phase, et en établissant une correspondance d'indices entre les nœuds des phases. Puis, des sous-matrices d'admittances pour chacune des trois phases sont obtenues. La matrice d'admittance YTP est reconstruite à partir de la concaténation des trois sous-matrices d'admittances en prenant en compte l'admittance correctrice illustrant les pertes du transformateur, lorsque les pertes du transformateur sont prises en compte.

Dans un deuxième cas, une matrice d'admittance YT peut être construite pour les branches basse tension BT en ne tenant pas compte des pertes liées au transformateur HTA/BT.

Dans ce deuxième cas, et contrairement à la matrice YTP, un seul nœud de référence est défini pour les trois phases de la branche basse tension BT considérée. La matrice YT est donc une matrice de taille (3*n-2)x(3*n-2).

Lors de la construction de la matrice YT, les pertes yt du transformateur ne sont pas prises en compte. Plus précisément, dans le premier cas avec une prise en compte des pertes, trois nœuds de référence sont créés pour chacune des trois phases. Les trois nœuds de référence sont connectés à chaque phase par trois connexions électriques indépendantes, chacune d'admittance yt, où yt est supposé connu et donné. Les pertes du transformateur se produisent dans ces trois connexions électriques supplémentaires. Les courants parcourant les trois connexions électriques sont en général différents et les valeurs des pertes peuvent également être différentes, de même que les tensions aux nœuds de référence des trois phases.

En faisant de nouveau référence à la figure 6, dans le cas où l'état en tension d'une des branches basse tension BT ou de la branche moyenne tension HTA n'est pas conforme, et donc qu'une régulation est à faire, des valeurs de commandes de régulation possibles sont déterminées.

Pour chaque branche basse tension BT et la branche moyenne tension HTA, les commandes de régulation comprennent un réglage de la tension de consigne au transformateur (Vref) si le transformateur dispose d'un tel réglage, et/ou un ajustement des puissances actives et/ou réactives en tous les nœuds commandables de ce réseau (P_i, Q_i), avec i l'indice d'un nœud.

Les valeurs des commandes de régulation sont déterminées par une résolution itérative du problème d'optimisation consistant à minimiser, pour chaque branche basse tension BT et la branche moyenne tension HTA, le maximum des écarts en valeur absolue entre la tension-cible Vcible(i) et la partie réelle de la tension au nœud i, real(V(i)), calculé sur l'ensemble des n nœuds du réseau, et en respectant :

- Les équations de Kirchhoff qui établissent une relation non linéaire entre les valeurs des charges et des productions et les tensions, qui sont fonction des inconnues Vref et (P_i, Q_i),
- Les domaines admissibles des puissances actives et réactives aux nœuds commandables ,
- les possibles valeurs de tension pouvant être imposées en certains nœuds,

et pour les branches basse tension BT triphasées, les égalités à imposer aux variables de décision (P_i, Q_i) correspondant à des producteurs commandables opérant en triphasé.

Le problème d'optimisation n'est pas linéaire, du fait des équations de Kirchhoff. La résolution du problème d'optimisation est effectuée de manière itérative, dans laquelle à chaque itération, une linéarisation des équations de Kirchhoff est effectuée afin d'approximer le calcul des commandes de régulation comme solution du problème d'optimisation de la forme :

$$\begin{cases} \min_{x} c^T x \\ s.c. \\ Ax \leq b \\ Ex = f \end{cases}$$

Où x désigne le vecteur inconnu des commandes de régulation qu'il s'agit de déterminer, cTx la fonction objectif et Ax<=b et Ex = f représentent l'ensemble des contraintes d'inégalités et d'égalités à respecter. La résolution d'un programme linéaire fait appel à des algorithmes connus et efficaces.

Dans le cas où toutes les commandes de régulation ne sont pas disponibles, par exemple si le réglage en charge n'est pas disponible, le sous-ensemble des commandes relève du même modèle. Pour ce faire les valeurs des variables correspondant aux commandes non disponibles sont fixées et optimisées par rapport aux autres variables.

$$\min_{Vref, P_i, Q_i} \left\| \begin{matrix} V_1 - V_{cible,1} \\ ... \\ V_N - V_{cible,N} \end{matrix} \right\|_{\infty}$$

Il est à noter que dans le cas d'une branche basse tension BT triphasée utilisant la matrice d'admittance YTP, la tension au nœud de référence (numéroté 1) n'a pas à être prise en compte dans le calcul de l'écart à la tension cible Vcible.

La fonction-objectif vise à garantir le respect des plages réglementaires des tensions en chaque nœud du réseau. La fonction-objectif proposée est le plus grand des écarts en valeur absolue entre la tension-cible Vcible(i) et la partie réelle de la tension au nœud i, real(V(i)), calculé sur l'ensemble des nœuds du réseau. Une telle fonction-objectif permet de rendre la solution aussi peu sensible que possible à des variations éventuelles des valeurs des puissances actives et réactives et garantir ainsi une certaine robustesse vis-à-vis des incertitudes sur les injections et les soutirages.

La prise en compte des lois de Kirchhoff est réalisée en procédant à une approximation linéaire de la relation entre les tensions et les puissances injectées. Diverses approximations linéaires existent (par exemple, l'approximation de la partie réelle du vecteur des tensions par une fonction linéaire des composantes réelles et des composantes imaginaires des puissances injectées).

Toute technique appropriée de linéarisation des équations de Kirchhoff permet de les réécrire sous la forme de contraintes linéaires du type :

$$Kx = S$$

L'initialisation, se fait en choisissant la tension cible comme point de linéarisations des équations de Kirchhoff, entre la tension cible des branches basse tension BT ou la tension cible de la branche moyenne tension HTA, selon que les commandes sont calculées pour une branche basse tension BT ou pour la branche moyenne tension HTA.

Pour la construction du programme linéaire, plusieurs contraintes sont à prendre en compte.

Une contrainte correspond aux domaines admissibles des puissances actives et réactives aux nœuds commandables, qui sont des données fixes obtenues à l'étape S30.

A chaque nœud commandable, l'ajustement des valeurs des puissances actives et réactives est à réaliser dans un domaine propre à l'équipement installé au nœud considéré.

Le premier cas de figure est celui dans lequel le domaine d'ajustement des puissances actives et réactives est convexe. Ce domaine est décrit par un polyèdre de $R^2$ (domaine convexe de $R^2$) dans lequel il est possible de choisir le couple des puissances actives et réactives ($P\_i, Q\_i$). Cette contrainte est de type :

$$Cx \leq d$$

Un exemple d'application dans lequel le domaine d'ajustement des puissances actives et réactives est convexe est sur un équipement photovoltaïque présent au niveau d'un nœud commandable. La figure 8 illustre un tel exemple. Sur la figure 8, le domaine d'ajustement des puissances actives et réactives est convexe est délimité entre la puissance active Pi, min et Pi, max.

Pour un déphasage entre puissances active et réactive de $\varphi$, le domaine d'admissibilité, hachuré sur la figure 8, est défini par les inégalités :

$$-\tan(\varphi) \cdot P_i \leq Q_i \leq \tan(\varphi) \cdot P_i$$

$$P_{i,min} \leq P_i \leq P_{i,max}$$

avec « tan » la fonction tangente appliquée à $\varphi$.

Ces deux inégalités peuvent se réécrire sous la forme :

$$\begin{bmatrix} -1 & 0 \\ 1 & 0 \\ -\tan(\varphi) & -1 \\ -\tan(\varphi) & 1 \end{bmatrix} \begin{bmatrix} P_i \\ Q_i \end{bmatrix} \leq \begin{bmatrix} -P_{i,min} \\ P_{i,max} \\ 0 \\ 0 \end{bmatrix}$$

De sorte que la contrainte est bien de la forme générale Cx <= d.

Le cas où le domaine nécessite un nombre plus élevé d'inégalités linéaires relève du même type de contraintes.

Le deuxième cas de figure est celui dans lequel le domaine d'ajustement des puissances actives et réactives n'est pas convexe.

Il s'agit alors d'approximer le domaine par un polyèdre de $R^2$ pour avoir une contrainte linéaire du même type, c'est-à-dire du type Cx <= d.

Pour cela, il est possible d'effectuer une convexification du domaine initial non convexe grâce à la détermination d'une enveloppe convexe. Cela peut être effectué par tout algorithme connu, par exemple l'algorithme de Marche de Jarvis, l'algorithme de Chan, le diagramme de Voronoï, etc.

Puis, le système de contrainte sur le domaine convexifié est construit.

La solution est obtenue suite à la résolution du programme linéaire et à l'obtention des commandes de régulation à la dernière étape de la figure 7.

Plus précisément, la solution obtenue est une commande de régulation correspondant à l'ajustement des puissances active et/ou réactive.

Il est alors vérifié si les valeurs d'ajustement des puissances active et/ou réactive obtenues appartiennent bien au domaine de fonctionnement de l'équipement considéré. Autrement dit, il est vérifié que les valeurs d'ajustement des puissances active et/ou réactive appartiennent bien au domaine initial qui est non convexe.

Lorsque la solution obtenue ne respecte pas les contraintes du domaine, il est possible de substituer à la solution un point du domaine initial.

Selon une réalisation, la substitution se fait par une technique de projection choisie. Par exemple, il est possible de choisir la projection euclidienne.

Si la solution respecte les contraintes du domaine, il n'y a pas de correction à effectuer.

Un exemple d'application dans lequel le domaine d'ajustement des puissances actives et réactives n'est pas convexe est un équipement éolien présent au niveau d'un nœud commandable. Les figures 9A à 9C illustrent un tel exemple.

Sur la figure 9A, le domaine d'ajustement des puissances actives et réactives non convexe est représenté en hachuré.

La convexification du domaine est représenté sur la figure 9B, avec le domaine non convexe initial représenté par les hachures, et le domaine supplémentaire ayant donné lieu à la convexification représenté par les croisillons.

Lors de la vérification de l'appartenance de la solution au domaine initial, il est déterminé si la solution obtenue se trouve bien dans le domaine initial, c'est-à-dire se trouve bien dans la partie hachurée de la figure 9B.

Si la solution obtenue se trouve dans le domaine initial, alors il n'y a pas de correction à faire.

Si la solution obtenue ne se trouve pas dans le domaine initial, comme illustré sur la figure 9C par le point en forme de croix, un ajustement est nécessaire. L'ajustement peut être fait en substituant à la solution obtenue un point du domaine initial selon toute technique choisie. Un exemple de technique peut-être une substitution par une projection selon une norme choisie.

La figure 9C illustre un exemple, non limitatif, de deux substitutions possibles.

La première substitution, illustrée par le point rond, est effectuée par la projection orthogonale de la solution obtenue sur le domaine initial, au moyen de la norme euclidienne.

La deuxième substitution, illustrée par le point triangulaire, est effectuée par la projection oblique de la solution obtenue sur le domaine initial, pour limiter la perte de puissance active.

Les contraintes relatives à la configuration d'une branche basse tension BT triphasée peuvent également être prises en compte.

Notamment, lorsqu'une branche basse tension BT est triphasée, sont prises en compte les contraintes d'égalités supplémentaires à imposer aux différentes variables de décision pour les puissances active et réactive correspondant à des producteurs opérant en triphasé au niveau de nœuds commandables.

Ces contraintes sont de la forme : *Tx = p.*

L'ajout des deux contraintes liant la tension au nœud de référence et la valeur de l'objectif dans le programme linéaire sont rendues inactives en raison du fait que, pour une branche basse tension BT triphasée utilisant la matrice d'admittance YTP, la tension au nœud de référence (numéroté 1) n'a pas à être prise en compte dans le calcul de l'écart à la tension cible.

Pour obtenir la formulation complète en programmation linéaire (PL) du problème de régulation, il reste à tenir compte du fait que les composantes du vecteur des puissances relatives aux injections et aux soutirages aux nœuds non commandables sont fixées et connues. Ce ne sont donc pas des variables du problème. Ces contraintes sont de la forme *Sx = v.*

Finalement, le problème d'optimisation prenant en compte toutes les contraintes et données fixes (étape S30, S31 de la figure 6), peut s'écrire :

$$\min_{x} \|\delta V(x)\|_{\infty}$$

*S.C.*

$$Kx = s$$

$$Tx = p$$

$$Sx = \dot{v}$$

$$Cx \leq d$$

Le problème d'optimisation peut être résolu par des solveurs connus.

Le problème d'optimisation peut être réécrit sous la forme d'un programme linéaire :

$$\min_{x,z} z$$

S.C.

$$-z \leq \delta V(x) \leq +z$$

$$Kx = s$$

$$\mathsf{T}x = p$$

$$Sx = v$$

$$Cx \leq d$$

La réécriture du problème d'optimisation sous la forme du programme linéaire ci-dessus permet notamment de traiter plus efficacement de grands réseaux de distribution.

Cela correspond à l'étape S33.

A l'étape S34, le programme linéaire peut être résolu au moyen de plusieurs techniques connues de l'art antérieur, et notamment au moyen de solveurs.

Une fois le programme linéaire résolu, une première valeur optimisée de la tension au nœud de référence et les valeurs des puissances active réactive aux nœuds commandable sont obtenues à l'étape S35.

Les puissances actives P(i) et réactives Q(i) ainsi obtenues sont utilisées ensemble comme faisant partie des commandes de régulation initiales. Les puissances réactives Q(i) seules ainsi obtenues peuvent également être utilisées.

La tension au nœud de référence peut toutefois être améliorée à l'étape S36. Plus précisément, l'étape S36 vise à augmenter la précision de cette première valeur optimisée.

En effet, la première valeur optimisée est obtenue suite à une linéarisation du système d'équations de Kirchhoff. Ainsi, la valeur obtenue par rapport à l'état en tension effectif du réseau, c'est-à-dire qui résulterait de la résolution exacte du système d'équations de Kirchhoff pour le vecteur S des puissances injectées aux différents nœuds du réseau, où, pour chaque nœud contrôlable i, la partie réelle (S(i)) et la partie imaginaire (S(i)) sont les valeurs prises par les variables de décision correspondant au nœud i à l'optimum du programme linéaire.

Or, la précision des valeurs de tension au nœud de référence Vref et de l'écart à la tension cible au nœud de référence Vcible peut être sensiblement améliorée par la détermination de l'état en tension minimisant l'écart à la tension cible au nœud de référence Vcible à partir des valeurs optimales des puissances injectées aux nœuds contrôlables. Pour cela, un calcul supplémentaire est effectué immédiatement après la résolution du programme linéaire.

Dans un premier temps, une recherche dichotomique sur la tension au nœud de référence peut être effectuée en utilisant une approximation linéaire des variations de l'état en tension (la solution du système de Kirchhoff) en fonction de la tension au nœud de référence, et à partir de la connaissance de deux solutions données de Kirchhoff, Vsol1 et Vsol2. Ces solutions correspondent à des valeurs choisies, encadrant la valeur de la tension cible au nœud de référence Vcible(ref). Ainsi, par exemple, les deux solutions peuvent être comprises entre 0.9xVcible(ref) et 1.1xVcible(ref), Vsol1 étant inférieure à la valeur de la tension cible au nœud de référence, et Vsol2 étant supérieure à la valeur de la tension cible au nœud de référence. De préférence, les solutions Vsol1 et Vsol2 correspondent respectivement aux valeurs 0.95xVcible(ref) et 1.05xVcible(ref) de la tension cible au nœud de référence. Le résultat de cette première étape conduit à identifier un encadrement de la valeur optimale finale inconnue de la tension au nœud de référence entre deux valeurs notées Vref1bis et Vref2bis.

Puis, le système d'équations de Kirchhoff est résolu pour chacune des deux valeurs Vref1bis et Vref2bis. Cela permet de déterminer deux nouvelles solutions Vsol1' et Vsol2'. Avec ces deux nouvelles solutions, la première étape est de nouveau mise en œuvre.

Cela permet d'obtenir une précision élevée sur l'état en tension.

A l'étape S37, la précision de la tension optimale au nœud de référence peut encore être améliorée. Pour cela, la valeur de la tension obtenue en sortie de l'étape S36 est utilisée comme point de linéarisation du programme linéaire. De fait, cette valeur est injectée dans l'étape de construction du programme linéaire (S32).

Ainsi, les étapes S30 à S37 peuvent être mises en œuvre de manière itérative, jusqu'à convergence de la solution. Le nombre d'itérations est compris entre 1 et 15, et de préférence entre 1 et 5, et de préférence entre 2 et 4. En sortie, une valeur optimale de la tension au nœud de référence est obtenue.

Cette valeur de la tension au nœud de référence fait notamment partie des commandes de régulation.

La figure 10 illustre plus précisément l'étape S8 de la figure 2, lors de laquelle la vérification de l'existence d'une solution assurant le plus petit écart entre les tensions effectives et les tensions-cibles de la branche moyenne tension HTA et des branches basse tension BT est effectuée.

En d'autres termes, il s'agit de déterminer s'il existe bien une solution permettant la régulation, ou si elle n'existe pas de déclencher une alarme.

Une initialisation est d'abord effectuée à l'étape S40, lors de laquelle une simulation de régulation est effectuée pour chaque branche basse tension BT en activant l'ensemble des commandes de régulation possibles, même si certaines commandes ne sont pas disponibles.

Plus précisément, une simulation de régulation comprenant l'activation de toutes les commandes de régulation possibles est effectuée pour chaque branche basse tension BT.

A chaque branche basse tension BT sont associées un ensemble de commandes de régulation possibles.

La simulation de régulation est notamment effectuée en utilisant les valeurs des commandes obtenues en sortie de la méthode décrite en référence à la figure 6.

Un test est ensuite effectué à l'étape S41, pour déterminer si les états en tension de toutes les branches basse tension BT sont conformes avec l'état en tension cible. Pour cela, les états en tension de chaque branche basse tension BT sont calculés suite à la simulation de régulation effectuée à l'étape S40.

Si l'état en tension des branches basse tension BT n'est pas conforme, une alarme est activée pour chaque branche basse tension BT non conforme (étape S53).

Puis à l'étape S42, les valeurs de correction CorrectS et CorrectY sont calculées. Ces valeurs sont calculées de la même manière que celle décrite en référence à la figure 5.

Les valeurs CorrectS et CorrectY sont ensuite utilisées pour effectuer l'étape d'agrégation des données relatives à chaque branche basse tension BT au niveau de leur nœud de rattachement avec la branche moyenne tension HTA, à l'étape S43.

Les étapes S42 et S43 correspondent aux étapes S21 et S22 décrites en référence à la figure 5.

Puis, une simulation de régulation de la branche moyenne tension HTA est effectuée à l'étape S44, en tenant compte des données agrégées des branches basse tension BT, et donc des interactions électriques entre la branche moyenne tension HTA et les branches basse tension BT qui y sont rattachées.

Comme pour les branches basse tension BT, un ensemble de commandes de régulation est associé à la branche moyenne tension HTA.

La simulation de régulation de la tension sur la branche moyenne tension HTA est effectuée en activant toutes les commandes de régulation possibles de l'ensemble de commandes de régulation associé à la branche moyenne tension HTA, même si certaines commandes ne sont pas disponibles, dont les valeurs ont été obtenues en sortie de la méthode décrite en référence à la figure 6. L'état en tension de la branche moyenne tension HTA peut également être obtenu.

Puis, à l'étape S45, les valeurs de tension aux nœuds de rattachement de chaque branche basse tension BT à la branche moyenne tension HTA sont calculées.

Cette étape est avantageuse puisqu'elle permet d'ajuster les valeurs de la tension aux nœuds de rattachement, en fonction de l'état en tension de la branche moyenne tension HTA obtenu suite à la simulation de régulation.

Il est ensuite déterminé à l'étape S46 si chaque branche basse tension BT dispose d'un régleur en charge sur leur nœud de référence.

Lorsqu'une branche basse tension BT ne dispose pas d'un régleur en charge, la tension au nœud de référence de la branche basse tension BT n'est pas commandable et ne fait donc pas partie des commandes disponibles pouvant être activées lors de la régulation effective de la tension. Pour ces branches basse tension BT, la tension au nœud de référence est imposée sur la valeur de la tension au nœud de rattachement de la branche basse tension BT à la branche moyenne tension HTA, multipliée par le rapport de transformation HTA/BT (étape S47).

L'ensemble de commandes de régulation associé à chaque branche basse tension BT ne disposant pas d'un régleur en charge est modifié pour retirer les commandes de régulation correspondant au réglage en charge et à l'ajustement de la tension au nœud de référence.

Les ensembles de commandes de régulation associés à chaque branche basse tension BT ne comprenant pas de régleur en charge comprennent donc le réglage en charge, la valeur de la tension au nœud de référence et l'ajustement des puissances actives et/ou réactives.

Autrement dit, il n'y a pas de contrainte sur la valeur de la tension au nœud de référence de la branche basse tension BT. La régulation peut être faite comme si la régulation de la branche moyenne tension HTA et la régulation de de la branche basse tension BT considérée étaient indépendantes et la valeur de la tension au nœud de référence peut être un levier activable pour la régulation de la tension (étape S48).

Lorsqu'une branche basse tension BT dispose d'un régleur en charge, la tension au nœud de référence de la branche basse tension BT est commandable. Autrement dit, toutes les commandes possibles sont disponibles et peuvent être activées lors de l'étape de régulation de la tension. Les ensembles des commandes de régulation associés à chaque branche basse tension BT disposant d'un régleur en charge ne sont pas modifiés et comprend toutes les commandes possibles.

Le procédé se poursuit à l'étape S49, durant laquelle une nouvelle simulation de régulation des branches basse tension BT est effectuée par l'activation des ensembles de commandes de régulation associés respectivement à chaque branche basse tension BT comprenant ou ne comprenant pas de régleur en charge.

Ainsi, pour les branches basse tension BT ne disposant pas de régleur en charge, la simulation de régulation est effectuée en prenant en compte le fait que la valeur de la tension au nœud de référence de la branche basse tension BT est imposée sur la valeur de la tension au nœud de rattachement avec la branche moyenne tension HTA. Autrement dit, l'ensemble des commandes activées pour cette simulation ne comprend pas la valeur de la tension au nœud de référence. Les commandes disponibles comprennent donc l'ajustement des puissances active et/ou réactive aux nœuds de la branche basse tension BT considérée.

Pour les branches basse tension BT disposant de régleur en charge, la simulation de régulation est effectuée avec toutes les commandes possibles. Les commandes de régulation activées comprennent donc l'ajustement de la valeur de la tension au nœud de référence ainsi que l'ajustement des puissances active et/ou réactive aux nœuds de la branche basse tension BT considérée.

Puis, à l'étape S50, durant laquelle de nouvelles valeurs des termes correctifs CorrectS et CorrectY sont calculés suite à la simulation de régulation sur les branches basse tension BT.

A l'étape S51 il est déterminé si le deuxième critère d'arrêt est satisfait. Ce critère d'arrêt peut notamment correspondre à un nombre d'itérations maximum fixé, une différence entre les résultats obtenus entre deux itérations successives, notamment si cette différence est inférieure à un seuil prédéfini ou encore un respect d'un critère prédéfini.

Si le critère d'arrêt n'est pas respecté, le procédé se poursuit par la mise en œuvre itérative des étapes S43 à S51, en commençant par l'agrégation des données relatives aux branches basse tension BT, obtenues à l'étape précédente (i.e. à l'étape S50), ce qui correspond à l'étape S43.

Si le critère d'arrêt est satisfait à l'étape S51, il est déterminé si les états en tension de chaque branche basse tension BT et de la branche moyenne tension HTA, obtenus suite aux simulations de régulation effectuées respectivement aux étapes S44 et S49 sont conformes aux plages réglementaires définis respectivement pour les branches basse tension BT et la branche moyenne tension HTA (étape S52).

Si l'état en tension respectif de chaque branche basse tension BT et de la branche moyenne tension HTA n'entre pas dans la première et la deuxième plage réglementaire, une alarme est activée pour chaque branche dont l'état en tension n'est pas conforme à l'étape S53.

Cela signifie notamment que la régulation conjointe de la branche moyenne tension HTA et des branches basse tension BT ne peut pas être effectuée. En effet, si en activant toutes les commandes possibles certaines tensions ne peuvent pas être régulées, il en découle que les branches concernées ne peuvent pas être régulées au pas de temps considéré.

Si tous les états en tension sont conformes, les ensembles de commandes de régulation associés à chaque branche basse tension BT et à chaque branche moyenne tension HTA forment ensemble l'ensemble de commandes de régulation conjointe pouvant être mis en œuvre pour la régulation effective des branches basse tension BT et de la branche moyenne tension HTA sont obtenues.

Contrairement à l'ensemble des commandes possibles activées à l'étape d'initialisation S40, le procédé retourne à l'étape S54 un ensemble de commandes « disponibles ». L'ensemble de commandes disponibles permet notamment de tenir compte de la présence ou de l'absence d'un régleur en charge sur le transformateur HTA/BT.

Le procédé se poursuit alors vers la figure 11. Les étapes mises en œuvre et illustrées par la figure 11 permettent de choisir, puis de mettre en œuvre, les commandes de régulation optimales pour permettre la régulation conjointe de la branche moyenne tension HTA et des branches basse tension BT qui lui sont rattachées.

Les commandes de régulation optimales comprennent les commandes suffisantes pour permettre la régulation.

Ainsi, dans certains cas, les commandes disponibles, obtenus à l'étape S54, ne font pas toutes partie des commandes optimales. Les commandes optimales représentent un sous-ensemble des commandes disponibles.

A l'étape S60, les listes hiérarchisées par ordre décroissant de préférence de mise en œuvre des commandes sont obtenues pour les branches basse tension BT et la branche moyenne tension HTA.

La hiérarchie des commandes est prédéfinie et tient compte notamment des contrats de connexion des producteurs, ou encore de la disponibilité des entités de production.

A l'étape S61, la première commande de la liste est sélectionnée, puis une simulation de régulation conjointe de la tension sur les branches basse tension BT et la branche moyenne tension HTA est effectuée.

Lors de cette simulation, seule la première commande des listes hiérarchisée est activée.

Puis, à l'étapes S62, l'état en tension des branches basse tension BT et de la branche moyenne tension HTA est calculé par la résolution du problème de « load flow » sous l'effet de la commande sélectionnée à l'étape S61.

Il est ensuite déterminé si les états en tension respectifs des branches basse tension BT et de la branche moyenne tension HTA sont conformes grâce à l'activation de la première commande (étape S63).

Si les états en tension ne sont pas conformes, la commande suivante sur les listes hiérarchisées est sélectionnée en addition à la commande précédemment sélectionnée, et une simulation de régulation est à nouveau effectuée à l'étape S64 avec les commandes cumulées.

Le procédé reprend à nouveau à l'étape S62 en calculant les états en tension des branches basse tension BT et de la branche moyenne tension HTA.

S'il est déterminé que les états en tension sont conformes à l'étape S63, les commandes sélectionnées ayant permis de réguler la tension des branches basse tension BT et de la branche moyenne tension HTA correspondent aux commandes suffisantes et sont les commandes optimales effectivement mises en œuvre sur le réseau de distribution et permettant la régulation conjointe des branches basse tension BT et de la branche moyenne tension HTA.

La figure 12 montre les effets de l'activation hiérarchisée de commandes de régulation permettant d'obtenir les commandes de régulation optimales et suffisantes à mettre en œuvre pour la régulation conjointe de la tension dans les plages prescrites.

Selon cet exemple, cinq commandes de régulation différentes peuvent être activées. Les listes comprennent donc les commandes C1 à C5, la commande C1 étant la première commande de la liste et la commande C5 la dernière.

Il est visible sur la figure que l'activation seule de la première commande C1 ne permet pas d'avoir un état en tension compris dans les plages de tension prescrites.

En revanche, l'activation des deux premières commandes de la liste C1 et C2 permet d'obtenir un état en tension conforme, c'est-à-dire inférieur aux plages de tension prescrites. Les deux premières commandes C1 et C2 sont donc les commandes de régulation optimales qui seront effectivement mises en œuvre et qui permettront la régulation conjointe de la branche moyenne tension HTA et des branches basse tension BT.

L'activation des commandes C1 à C3, C1 à C4 et C1 à C5 sont illustrées à titre d'exemple. Comme visible sur la figure, l'activation de ces commandes permettraient également la régulation conjointe de la tension. Toutefois, seules les commandes C1 et C2 seront activées puisque ce sont les commandes suffisantes pour que l'état en tension sur le réseau soit conforme. L'activation des commandes C3 à C5 devient donc superflue.

Les figures 13A et 13B illustrent des exemples d'architecture de machines sur lesquelles le procédé peut être mis en œuvre.

Le calculateur utilisé peut être soit un calculateur classique, comprenant un seul processeur, et appelé « monocœur», soit un calculateur comprenant plusieurs processeurs et appelés « multicœurs» ou « cluster » en anglais.

Dans la mise en œuvre du procédé, certains calculs peuvent être réalisés indépendamment les uns des autres, et peuvent donc être traités en parallèle, notamment le calcul de l'état en tension d'une branche basse tension BT seule.

Pour d'autres calculs, des connaissances supplémentaires sont nécessaires de sorte que ces calculs sont réalisés séquentiellement, notamment par exemple le calcul de l'état en tension de la branche moyenne tension HTA suite à l'étape d'agrégation des données des branches basse tension BT.

Pour un réseau de distribution comprenant un grand nombre de branches basse tension BT, le calcul des commandes optimales de régulation conjointe peut prendre un certain temps, qui ne serait pas compatible avec une mise en œuvre toutes les dix minutes.

Aussi, les commandes de régulation peuvent être calculées de manière préférentiellement sur un calculateur « multicœurs». Ceci permet de mener en parallèle les calculs de l'état en tension et des commandes de régulation pour chaque branche basse tension BT, ainsi que l'agrégation des données relatives aux branches basse tension BT, de manière indépendante les uns des autres et de réduire les temps de calcul.

La figure 14 illustre un mode d'application du procédé de régulation sur un réseau de distribution schématisé.

Le réseau de distribution comprend une branche moyenne tension HTA, alimentée par une branche haute tension HTB (non représentée) au niveau d'un transformateur HTB/HTA comprenant un régleur en charge HTA. Le réseau de distribution comprend en outre une pluralité de branches basse tension BT, alimentées par la branche moyenne tension HTA au niveau d'un transformateur HTA/BT pouvant comprendre un régleur en charge HTA/BT.

A des fins de clarté, seule une branche basse tension BT comprenant un régleur en charge est représentée sur la figure 14.

Chacune des branches moyenne et basse tension comprend une pluralité de nœuds non-commandables, représentés comme des cercles vides sur le schéma, et une pluralité de nœuds commandables, représentés comme des cercles pleins sur le schéma.

Chacune des branches moyenne et basse tension comprend un consommateur dont la consommation est respectivement mesurée par un compteur HTA pour la branche moyenne tension HTA et par un compteur classique BT ou un compteur intelligent BT pour la branche basse tension.

A partir de ces compteurs, les puissances actives et réactives (P, Q)réel, c'est-à-dire les puissances actives et réactives effectivement mesurées dans les branches moyenne ou basse tension, sont transmises vers le poste de conduite régionale en passant par le concentrateur pour les branches basse tension BT. Pour la branche moyenne tension HTA, la transmission peut être faite via un réseau téléphonique commuté (RTC) ou équivalent et/ou réseau cellulaire type GPRS par exemple.

Le réseau de distribution comprend également dans chaque branche moyenne et basse tension au moins un producteur-consommateur, dont la consommation et la production sont respectivement transmises à un compteur intelligent HTA pour la branche moyenne tension HTA et à un compteur intelligent BT pour la branche basse tension BT. Les compteurs intelligents peuvent être situés au niveau d'un nœud commandable.

Les puissances actives et réactives (P, Q)réel, c'est-à-dire les puissances actives et réactives effectivement mesurées dans les branches moyenne ou basse tension au niveau du producteur-consommateur, sont également respectivement transmises vers le poste de conduite régionale en passant par le concentrateur pour les branches basse tension BT. Pour la branche moyenne tension HTA, la transmission peut être faite via un réseau téléphonique commuté (RTC) ou équivalent et/ou réseau cellulaire type GPRS par exemple.

Chaque régleur en charge HTB/HTA et HTA/BT reçoit également la tension Vréel correspondante, c'est-à-dire la tension effective dans chaque branche moyenne ou basse tension.

Le procédé de régulation tel que décrit en référence, notamment, aux figures 2, 5, 6, 10 et 11 est mis en œuvre au niveau d'un poste de conduite régionale (non représenté).

Les commandes de régulation optimales sont envoyées vers les équipements et dispositifs concernés.

Plus précisément, la valeur optimale de la tension Vopt à appliquer sur la branche moyenne tension est envoyée au régleur en charge HTB/HTA. Lorsque le réglage en charge du transformateur HTA/BT est disponible, la valeur optimale de la tension Vopt à appliquer sur la branche basse tension est envoyée au régleur en charge HTA/BT.

D'autre part, les valeurs optimales des couples P(i)opt et Q(i)opt aux nœuds commandables, telle que déterminées par le procédé de régulation, sont transmises au niveau des compteurs intelligents et des boites de contrôle-commande des nœuds commandables. En pratique, chaque producteur-consommateur en un nœud commandable devra produire ou absorber du réactif (tension trop haute ou trop basse respectivement) selon les valeurs optimales des couples P(i)opt et Q(i)opt calculées. La mise en œuvre opérationnelle de cet ajustement, en « aval compteur » et relevant de la responsabilité de l'usager, comprend donc une série d'actions réalisées par un contrôle-commande chez l'usager comme par exemple un écrêtage de la production, le stockage dans tout moyen de stockage de la production excédentaire, la gestion des flexibilités notamment pour la recharge de véhicule électrique, l'activation du chauffage, etc., et l'ajustement des puissances actives et réactives sur un onduleur.

**Revendications**

1. Procédé de régulation conjointe d'une tension en chaque nœud d'un réseau de distribution comprenant une branche moyenne tension, HTA, et au moins une, et de préférence une pluralité de branches basse tension, BT, le réseau de distribution comprenant en outre une pluralité de générateurs d'énergies, chaque branche basse tension étant rattachée à la branche moyenne tension en un nœud de rattachement au niveau d'un transformateur HTA/BT, chaque branche basse tension comprenant en outre un nœud de référence, une pluralité de nœuds commandables et une pluralité de nœuds non-commandables, la branche moyenne tension étant alimentée par une branche haute tension rattachée à la branche moyenne tension en un nœud de rattachement au niveau d'un transformateur HTB/HTA avec régleur en charge, la branche moyenne tension comprenant en outre un nœud de référence, une pluralité de nœuds commandables et une pluralité de nœuds non-commandables, chaque nœud des branches moyenne tension et basse tension étant soumis à des soutirages et/ou injections d'énergie, ladite au moins une branche, ou au moins une parmi la pluralité de branches, basse tension étant en mode triphasé, le procédé comprenant :

   - une définition :

      °d'une tension cible en chaque nœud de chaque branche basse tension,
      °d'une première plage de tensions prescrite encadrant la tension cible de chaque branche basse tension,
      °d'une tension cible en chaque nœud de la branche moyenne tension,
      °d'une deuxième plage de tension prescrite encadrant la tension cible de la branche moyenne tension ;

et le procédé comprenant, à chaque pas d'un temps prédéterminé :

- une détermination d'un état en tension des branches basse tension ;
- une détermination d'un état en tension de la branche moyenne tension prenant en compte des interactions électriques des branches basse tension qui lui sont rattachées ;
- puis, une comparaison :

°de l'état en tension effectif de chaque branche basse tension avec la première plage de tension prescrite,
°de l'état en tension effectif de la branche moyenne tension avec la deuxième plage de tension prescrite ;

- si au moins une tension de la branche basse tension et/ou de la branche moyenne tension est en en-dehors respectivement de la première plage de tension prescrite et/ou de la deuxième plage de tension prescrite :

- une recherche d'un ensemble de commandes de régulation conjointe permettant que la tension effective de la branche basse tension et de la branche moyenne tension soient compris respectivement dans la première plage de tension prescrite et dans la deuxième plage de tension prescrite :

- une détermination et une mise en œuvre d'au moins une commande optimale de régulation parmi l'ensemble de commandes de régulation conjointe,

**caractérisé en ce que** la recherche de l'ensemble de commandes de régulation conjointe pour chaque branche basse tension triphasée est précédée par une construction d'une matrice d'admittance triphasée comprenant, pour chaque branche basse tension triphasée :

°une création d'une liste de nœuds pour chacune des trois phases de la branche basse tension triphasée en effectuant :

*un triplement de chaque nœud de la branche basse tension, un nœud de chaque triplet de nœuds étant respectivement associé à l'une des trois phases, et
*une correspondance d'indices des nœuds de chacune des trois phases ;

°une obtention de trois sous-matrices d'admittance correspondant respectivement à une matrice d'admittance de chacune des trois phases de la branche basse tension ;
°une reconstruction d'une matrice d'admittance triphasée par une concaténation des trois sous-matrices d'admittance en prenant en compte une admittance correctrice illustrant des pertes au niveau du transformateur HTA/BT de la branche basse tension considérée.

2. Procédé selon la revendication 1, dans lequel :
la détermination de ladite au moins une commande optimale de régulation à mettre en œuvre parmi l'ensemble de commandes de régulation comprend :

- une obtention d'une liste hiérarchisée de commandes de régulation selon un ordre de priorité décroissante de mise en œuvre,
- une simulation d'une régulation conjointe de la branche moyenne tension et des branches basse tension par l'activation d'une première commande de régulation parmi l'ensemble de commandes de régulation conjointe, la première commande activée correspondant à une première commande sur la liste hiérarchisée, et, si l'état en tension des branches basse tension et moyenne tension n'est pas compris dans la première plage de tension prescrite et/ou dans la deuxième plage de tension prescrite,

°procéder itérativement à d'autres simulations de régulation conjointe en ajoutant, à chaque itération, la commande de régulation suivante dans la liste hiérarchisée, jusqu'à ce que les états en tension des branches basse tension et de la branche moyenne tension soient compris respectivement dans la tension prescrite plage de tension prescrite et dans la deuxième plage de sécurité,

- lorsque les états en tension des branches basse tension et de la branche moyenne tension sont compris respectivement dans la première plage de tension prescrite et dans la deuxième plage de tension prescrite, une obtention en sortie de ladite au moins une commande optimale de régulation à mettre en œuvre.

**3.** Procédé selon l'une des revendications précédentes, dans lequel la recherche de l'ensemble de commandes de régulation conjointe pour chaque branche basse tension et pour la branche moyenne tension est précédée par une étape de calcul de valeurs de commandes de régulation comprenant :

- une résolution itérative, par une technique de point fixe, d'un problème d'optimisation prenant en compte :

°des contraintes relatives aux domaines admissibles des puissances actives et réactives aux nœuds commandables,
°des contraintes relatives à la configuration triphasée de la branche basse tension,

chaque itération comprenant une résolution d'un programme linéaire intégrant une linéarisation des équations de Kirchhoff,
le programme retournant en sortie des valeurs des commandes de régulation,
les commandes de régulation comprenant :

°un ajustement d'une valeur de tension au nœud de rattachement d'une branche basse tension à la branche moyenne tension pour un réglage en charge du transformateur HTA/BT, lorsque le réglage est disponible,
°un ajustement d'une valeur de tension au nœud de rattachement de la branche moyenne tension pour un réglage en charge des transformateurs HTB/HTA,
°un ajustement de puissance active (P), en moyenne tension et en basse tension,
°un ajustement de puissance réactive (Q), en moyenne tension et en basse tension, et/ou
°un ajustement de puissance active et réactive (P, Q), en moyenne tension et en basse tension.

**4.** Procédé selon la revendication précédente, dans lequel lorsqu'un domaine admissible des puissances actives et réactives aux nœuds commandables n'est pas convexe, le procédé comprend :

- une convexification du domaine initial non-convexe,
- suite à la résolution du problème d'optimisation, une vérification que les valeurs d'ajustement des puissances active et réactive (P, Q) se trouvent dans le domaine initial et, si ce n'est pas le cas,

*une substitution des valeurs d'ajustement des puissances active et réactive (P, Q) par des valeurs comprises dans le domaine initial, pour disposer d'une solution respectant le domaine initial d'ajustement des puissances actives et réactives.

**5.** Procédé selon l'une des revendications précédentes, dans lequel la recherche de l'ensemble de commandes de régulation conjointe pour les branches basse tension et la branche moyenne tension comprend :

- respectivement, une définition d'un ensemble de commandes de régulation pour chaque branche basse tension et la branche moyenne tension, chaque ensemble de commandes de régulation comprenant toutes les commandes de régulation possibles,
- pour chaque branche basse tension, une première étape de simulation d'une régulation par une mise en œuvre de l'ensemble des commandes de régulation de la branche basse tension considérée,
- une détermination de l'état en tension de chaque branche basse tension, et
- lorsque l'état en tension de chaque branche basse tension entre dans la première plage de tension prescrite :

°une agrégation de données relatives à chaque branche basse tension au niveau du nœud de rattachement respectif de chaque branche basse tension à la branche moyenne tension,
°une simulation de régulation de la branche moyenne tension par une activation de l'ensemble des commandes de régulation de la branche moyenne tension, en tenant compte des données agrégées,
°un calcul des valeurs de tension aux nœuds de référence des branches basse tension agrégées,
°et pour chaque branche basse tension ne disposant pas d'un régleur en charge :

*la valeur de la tension au nœud de référence de la branche basse tension est imposée sur une valeur de la tension au nœud de rattachement de la branche basse tension à la branche moyenne tension, multipliée par un rapport de transformation du transformateur,

le procédé comprenant ensuite la mise en œuvre itérative des étapes suivantes jusqu'à ce qu'un premier critère d'arrêt soit rempli :

- une modification de l'ensemble des commandes de chaque branche basse tension considérée en retirant une commande correspondant à un réglage en charge du transformateur,
- une autre étape de simulation de régulation de chaque branche basse tension ne disposant pas d'un régleur en charge, en activant l'ensemble des commandes de régulation de chaque branche basse tension considérée,
- puis, une obtention de chaque état en tension des branches basse tension ne disposant pas d'un régleur en charge,
- un retour à l'étape d'agrégation des données,

si une branche basse tension dispose d'un régleur en charge, l'ensemble de commandes de régulation comprend toutes les commandes de régulation possibles, le procédé comprenant ensuite le calcul des états en tension des branches moyenne et basse tension, suite à l'activation respective des ensembles de commandes de chaque branche basse tension et de la branche moyenne tension, et

- lorsque les états en tension des branches moyenne et basse tension entrent respectivement dans la première plage de tension prescrite et dans la deuxième plage de tension prescrite, une obtention de chaque ensemble de commandes de régulation correspondant à chaque branche basse tension et pour la branche moyenne tension, lesdits ensembles de commandes formant l'ensemble de commandes de régulation conjointe.

6. Procédé selon la revendication précédente, dans lequel :

- si, suite à la détermination de l'état en tension de chaque branche basse tension, au moins un état en tension d'une branche basse tension est en dehors de la première plage de tensions prescrite, une alarme est activée pour ladite au moins une branche basse tension, et/ou
- si, suite au calcul des états en tension des branches moyenne et basse tension, l'état en tension d'au moins une branche basse tension ou l'état en tension de la branche moyenne tension est en-dehors respectivement de la première plage de tensions prescrite et/ou de la deuxième plage de tensions prescrite, une alarme est activée.

7. Procédé selon l'une des revendications précédentes, dans lequel la détermination de l'état en tension des branches basse tension et de la branche moyenne tension comprend :

- une détermination de l'état en tension de chaque branche basse tension,
- puis, une étape d'agrégation de données relatives à chaque branche basse tension au niveau du nœud de rattachement respectif de chaque branche basse tension à la branche moyenne tension en

*calculant un couple de valeurs de puissances active et réactive de chaque branche basse tension, chaque couple de puissances active et réactive étant respectivement ajouté à des valeurs de puissances active et réactive aux nœuds de rattachement de chaque branche basse tension à la branche moyenne tension, et en
*corrigeant chaque terme diagonal d'une matrice d'admittance de la branche moyenne tension, chaque terme diagonal correspondant respectivement à chaque nœud de rattachement d'une branche basse tension à la branche moyenne tension ;

- suite à l'étape d'agrégation, une obtention de l'état en tension effectif en chaque nœud de la branche moyenne tension et des branches basse tension.

8. Procédé selon la revendication précédente, dans lequel les états en tension effectif en chaque nœud de la branche moyenne tension et des branches basse tension sont obtenus pas une application itérative des étapes suivantes, jusqu'à satisfaire un premier critère d'arrêt prédéfini :

- une détermination d'un état en tension effectif de la branche moyenne tension, prenant en compte les données agrégés de chaque branche basse tension, pour obtenir des tensions effectives en chaque nœud de la branche moyenne tension,
- puis, une détermination d'un état en tension effectif de chaque branche basse tension pour obtenir des tensions effectives en chaque nœud de chaque branche basse tension, à partir duquel sont obtenues de nouvelles valeurs des couples de puissances active et réactive de chaque branche basse tension et des termes diagonaux de la matrice d'admittance du la branche moyenne tension,
- une obtention de l'état en tension effectif en chaque nœud de la branche moyenne tension et des branches basse tension lorsque le première critère d'arrêt est satisfait.

9. Calculateur ayant une architecture multicœurs et étant agencé pour mettre en œuvre un procédé selon l'une des revendications précédentes.

10. Programme informatique comportant des instructions pour la mise en œuvre du procédé selon l'une des revendications 1 à 9 lorsque ce programme est exécuté par un ou plusieurs processeur(s).

11. Support d'enregistrement non transitoire lisible par un ordinateur sur lequel est enregistré un programme pour la mise en œuvre du procédé selon l'une des revendications 1 à 9 lorsque ce programme est exécuté par un ou plusieurs processeur(s).

**Patentansprüche**

1. Verfahren zur gemeinsamen Regelung einer Spannung in jedem Knoten eines Verteilungsnetzes, das einen Mittelspannungszweig, HTA, und mindestens einen, bevorzugt eine Mehrzahl von Niederspannungszweigen, BT, umfasst, wobei das Verteilungsnetz ferner eine Mehrzahl von Energieerzeugern umfasst, wobei jeder Niederspannungszweig an einem Verbindungsknoten auf der Höhe eines HTA/BT-Transformators an den Mittelspannungszweig angeschlossen ist, wobei jeder Niederspannungszweig ferner einen Referenzknoten, eine Mehrzahl von steuerbaren Knoten und eine Mehrzahl von nicht steuerbaren Knoten umfasst, wobei der Mittelspannungszweig von einem Hochspannungszweig gespeist wird, der mit dem Mittelspannungszweig an einem Verbindungsknoten auf der Höhe eines HTB/HTA-Transformators mit Lastregler verbunden ist, wobei der Mittelspannungszweig ferner einen Referenzknoten, eine Mehrzahl von steuerbaren Knoten und eine Mehrzahl von nicht steuerbaren Knoten umfasst, wobei jeder Knoten der Mittelspannungs- und Niederspannungszweige Energieentnahmen und/oder -einspeisungen unterliegt, wobei der mindestens eine Zweig oder mindestens einer der Mehrzahl von Niederspannungszweigen in Dreiphasenbetrieb ist, wobei das Verfahren umfasst:

   - eine Definition:

      o einer Zielspannung an jedem Knoten jedes Niederspannungszweigs,
      o eines ersten vorgegebenen Spannungsbereichs, der die Zielspannung jedes Niederspannungszweigs umreißt,
      o einer Zielspannung an jedem Knoten des Mittelspannungszweigs,
      o eines zweiten vorgegebenen Spannungsbereichs, der die Zielspannung des Mittelspannungszweigs umreißt;

   und wobei das Verfahren in jedem vorgegebenen Zeitschritt umfasst:

   - eine Bestimmung eines Spannungszustands der Niederspannungszweige;
   - eine Bestimmung eines Spannungszustands des Mittelspannungszweigs unter Berücksichtigung der elektrischen Wechselwirkungen der daran angeschlossenen Niederspannungszweige;
   - dann einen Vergleich:

      o des tatsächlichen Spannungszustands jedes Niederspannungszweigs mit dem ersten vorgegebenen Spannungsbereich,
      o des tatsächlichen Spannungszustands des Mittelspannungszweigs mit dem zweiten vorgegebenen Spannungsbereich;

   - wenn mindestens eine Spannung des Niederspannungszweigs und/oder des Mittelspannungszweigs außerhalb des ersten vorgegebenen Spannungsbereichs bzw. des zweiten vorgegebenen Spannungsbereichs liegt:
   - eine Suche nach einer Gruppe von gemeinsamen Regelungsbefehlen, die es ermöglichen, dass die tatsächliche Spannung des Niederspannungszweigs und des Mittelspannungszweigs innerhalb des ersten bzw. des zweiten vorgegebenen Spannungsbereichs liegen:
   - eine Bestimmung und Umsetzung mindestens eines optimalen Regelungsbefehls aus der Gruppe von gemeinsamen Regelungsbefehlen,

   **dadurch gekennzeichnet, dass** der Suche nach der Gruppe von Regelungsbefehlen für jeden dreiphasigen Niederspannungszweig eine Konstruktion einer dreiphasigen Admittanzmatrix vorausgeht, die für jeden dreiphasigen Niederspannungszweig umfasst:

  ∘ die Erstellung einer Knotenliste für jede der drei Phasen des dreiphasigen Niederspannungszweigs durch:

    * eine Dreifachaufteilung jedes Knotens des Niederspannungszweigs, wobei ein Knoten jedes Dreierknotensatzes jeweils einer der drei Phasen zugeordnet wird, und
    * eine Zuordnung von Indizes der Knoten jeder der drei Phasen;

  ∘ eine Ermittlung von drei Admittanz-Submatrizen, die jeweils einer Admittanzmatrix jeder der drei Phasen des Niederspannungszweigs entsprechen;
  ∘ eine Rekonstruktion einer dreiphasigen Admittanzmatrix durch Verkettung der drei Admittanz-Submatrizen unter Berücksichtigung einer Korrekturadmittanz, die Verluste am HTA/BT-Transformator des betrachteten Niederspannungszweigs veranschaulicht.

2. Verfahren nach Anspruch 1, wobei die Bestimmung des mindestens einen umzusetzenden optimalen Regelungsbefehls, der aus der Gruppe von Regelungsbefehlen gewählt wird, umfasst:

    - den Erhalt einer hierarchischen Liste von Regelungsbefehlen in absteigender Reihenfolge ihrer Ausführung,
    - Simulieren einer gemeinsamen Regelung des Mittelspannungszweigs und der Niederspannungszweige durch Aktivieren eines ersten Regelungsbefehls aus der Gruppe von gemeinsamen Regelungsbefehlen, wobei der erste aktivierte Befehl einem ersten Befehl in der hierarchischen Liste entspricht, und, wenn der Spannungszustand der Niederspannungs- und Mittelspannungszweige nicht im ersten vorgegebenen Spannungsbereich und/oder im zweiten vorgegebenen Spannungsbereich liegt,

      ∘ wiederholte Durchführung weiterer gemeinsame Regelungssimulationen, wobei bei jeder Iteration der nächste Regelungsbefehl aus der hierarchischen Liste hinzugefügt wird, bis die Spannungszustände der Niederspannungszweige und des Mittelspannungszweigs jeweils innerhalb des vorgegebenen Spannungsbereichs und des zweiten Sicherheitsbereichs liegen,

    - wenn die Spannungszustände der Niederspannungszweige und des Mittelspannungszweigs jeweils innerhalb des ersten vorgegebenen Spannungsbereichs und des zweiten vorgegebenen Spannungsbereichs liegen, Erreichen des mindestens einen auszugebenden optimalen Regelungsbefehls.

3. Verfahren nach einem der vorhergehenden Ansprüche, wobei der Suche nach der Gruppe der gemeinsamen Regelungsbefehle für jeden Niederspannungszweig und für den Mittelspannungszweig ein Schritt zur Berechnung von Regelungsbefehlswerten vorausgeht, der umfasst:

    - eine iterative Lösung eines Optimierungsproblems unter Berücksichtigung folgender Punkte mittels einer Fixpunkttechnik:

      ∘ Einschränkungen hinsichtlich der zulässigen Bereiche der Wirk- und Blindleistungen an den steuerbaren Knoten,
      ∘ Einschränkungen hinsichtlich der dreiphasigen Konfiguration des Niederspannungszweigs,

    wobei jede Iteration die Lösung eines linearen Programms umfasst, das eine Linearisierung der Kirchhoffschen Gleichungen integriert, wobei das Programm als Ergebnis die Werte der Regelungsbefehle ausgibt, wobei die Regelungsbefehle Folgendes umfassen:

      ∘ eine Einstellung eines Spannungswerts am Verbindungsknoten eines Niederspannungszweigs zum Mittelspannungszweig für eine Lastregelung des HTA/BT-Transformators, wenn die Regelung verfügbar ist,
      ∘ eine Einstellung eines Spannungswertes am Verbindungsknoten des Mittelspannungszweigs zur Lastregelung der HTB/HTA-Transformatoren,
      ∘ eine Einstellung der Wirkleistung (P) in Mittelspannung und Niederspannung,
      ∘ eine Einstellung der Blindleistung (Q) in Mittelspannung und Niederspannung und/oder
      ∘ eine Einstellung der Wirk- und Blindleistung (P, Q) in Mittelspannung und Niederspannung.

4. Verfahren nach dem vorhergehenden Anspruch, wobei, wenn ein zulässiger Bereich der Wirk- und Blindleistungen an den steuerbaren Knoten nicht konvex ist, das Verfahren umfasst:

- eine Konvexifizierung des ursprünglich nicht konvexen Bereichs,
- nach der Lösung des Optimierungsproblems eine Überprüfung, ob die Werte der Wirk- und Blindleistungseinstellung (P, Q) im ursprünglichen Bereich liegen, und, falls dies nicht der Fall ist,

    * Ersetzen der Einstellwerte für die Wirk- und Blindleistung (P, Q) durch Werte, die im ursprünglichen Bereich liegen, um eine Lösung zu erhalten, die den ursprünglichen Einstellbereich für die Wirk- und Blindleistung einhält.

5. Verfahren nach einem der vorhergehenden Ansprüche, wobei die Suche nach der Gruppe von gemeinsamen Regelungsbefehlen für die Niederspannungszweige und den Mittelspannungszweig umfasst:

- jeweils eine Definition einer Gruppe von Regelungsbefehlen für jeden Niederspannungszweig und den Mittelspannungszweig, wobei jede Gruppe von Regelungsbefehlen alle möglichen Regelungsbefehle umfasst,
- für jeden Niederspannungszweig einen ersten Schritt der Simulation einer Regelung durch Ausführung der Gruppe von Regelungsbefehlen des betreffenden Niederspannungszweigs,
- eine Bestimmung des Spannungszustands jedes Niederspannungszweigs und
- wenn der Spannungszustand jedes Niederspannungszweigs in den ersten vorgegebenen Spannungsbereich eintritt:

    ○ eine Aggregation von Daten, die sich auf jeden Niederspannungszweig beziehen, auf der Ebene des jeweiligen Verbindungsknotens jedes Niederspannungszweigs mit dem Mittelspannungszweig,
    ○ eine Regelungssimulation des Mittelspannungszweigs durch Aktivierung der Gruppe von Regelungsbefehlen des Mittelspannungszweigs unter Berücksichtigung der aggregierten Daten,
    ○ eine Berechnung der Spannungswerte an den Referenzknoten der aggregierten Niederspannungszweige,
    ○ und für jeden Niederspannungszweig, der nicht über einen Lastregler verfügt:

        * der Wert der Spannung am Referenzknoten des Niederspannungszweigs wird auf einen Wert der Spannung am Verbindungsknoten des Niederspannungszweigs mit dem Mittelspannungszweig gesetzt, multipliziert mit einem Transformator-Übersetzungsverhältnis, wobei das Verfahren anschließend die iterative Durchführung der folgenden Schritte umfasst, bis ein erstes Abschaltkriterium erfüllt ist:

            - eine Änderung der Gruppen vom Befehlen jedes betrachteten Niederspannungszweigs durch Entfernen eines Befehls, der einer Lastregelung des Transformators entspricht,
            - einen weiteren Schritt zur Simulation der Regelung jedes Niederspannungszweigs, der nicht über einen Lastregler verfügt, durch Aktivierung der Gruppe von Regelungsbefehlen jedes betrachteten Niederspannungszweigs,
            - anschließend Ermittlung jedes Spannungszustands der Niederspannungszweige, die nicht über einen Lastregler verfügen,
            - die Rückkehr zum Schritt der Datenaggregation, wenn ein Niederspannungszweig über einen Lastregler verfügt, wobei die Gruppe von Regelungsbefehlen alle möglichen Regelungsbefehle umfasst, wobei das Verfahren anschließend die Berechnung der Spannungszustände der Mittel- und Niederspannungszweige nach der jeweiligen Aktivierung der Gruppe von Befehlen jedes Niederspannungszweigs und des Mittelspannungszweigs umfasst, und
            - wenn die Spannungszustände der Mittel- und Niederspannungszweige in den ersten vorgegebenen Spannungsbereich bzw. in den zweiten vorgegebenen Spannungsbereich eintreten, Erreichen jeder Gruppe von Regelungsbefehlen, die jedem Niederspannungszweig und dem Mittelspannungszweig entspricht, wobei die Gruppen von Regelungsbefehlen die Gruppe von gemeinsamen Regelungsbefehlen bilden.

6. Verfahren nach dem vorhergehenden Anspruch, wobei:

- wenn nach der Ermittlung des Spannungszustands jedes Niederspannungszweigs mindestens ein Spannungszustand eines Niederspannungszweigs außerhalb des ersten vorgegebenen Spannungsbereichs liegt, ein Alarm für den mindestens einen Niederspannungszweig aktiviert wird, und/oder
- wenn nach der Berechnung der Spannungszustände der Mittel- und Niederspannungszweige der Spannungszustand mindestens eines Niederspannungszweigs oder der Spannungszustand des Mittelspannungszweigs außerhalb des ersten vorgegebenen Spannungsbereichs bzw. des zweiten vorgegebenen Spannungsbereichs liegt, ein Alarm ausgelöst wird.

7. Verfahren nach einem der vorhergehenden Ansprüche, wobei die Ermittlung des Spannungszustands der Niederspannungszweige und des Mittelspannungszweigs umfasst:

- eine Ermittlung des Spannungszustands jedes Niederspannungszweigs,
- anschließend einen Schritt zum Aggregieren von Daten zu jedem Niederspannungszweig an dem jeweiligen Verbindungsknoten jedes Niederspannungszweigs mit dem Mittelspannungszweig durch

   * Berechnung eines Paares von Wirk- und Blindleistungswerten jedes Niederspannungszweigs, wobei jedes Paar von Wirk- und Blindleistungswerten jeweils zu den Wirk- und Blindleistungswerten an den Verbindungsknoten jedes Niederspannungszweigs mit dem Mittelspannungszweig addiert wird, und
   * Korrektur jedes Diagonalglieds einer Admittanzmatrix des Mittelspannungszweigs, wobei jeder Diagonalterm jeweils dem Verbindungsknoten eines Niederspannungszweigs mit dem Mittelspannungszweig entspricht;

- nach dem Aggregationsschritt Ermitteln des tatsächlichen Spannungszustands an jedem Knoten des Mittelspannungszweigs und der Niederspannungszweige.

8. Verfahren nach dem vorhergehenden Anspruch, wobei die effektiven Spannungszustände an jedem Knoten des Mittelspannungszweigs und der Niederspannungszweige durch wiederholte Anwendung der folgenden Schritte erhalten werden, bis ein erstes vordefiniertes Abschaltkriterium erfüllt ist:

- Bestimmung eines effektiven Spannungszustands des Mittelspannungszweigs unter Berücksichtigung der aggregierten Daten jedes Niederspannungszweigs, um die effektiven Spannungen an jedem Knoten des Mittelspannungszweigs zu erhalten,
- anschließend Bestimmung eines effektiver Spannungszustand jedes Niederspannungszweigs, um effektive Spannungen an jedem Knoten jedes Niederspannungszweigs zu erhalten, aus denen neue Werte der Wirk- und Blindleistungspaare jedes Niederspannungszweigs und der Diagonalelemente der Admittanzmatrix des Mittelspannungszweigs erhalten werden,
- Ermittlung des effektiven Spannungszustands an jedem Knoten des Mittelspannungszweigs und der Niederspannungszweige, wenn das erste Abschaltkriterium erfüllt ist.

9. Rechner mit einer Multicore-Architektur, der zur Durchführung eines Verfahrens nach einem der vorhergehenden Ansprüche angeordnet ist.

10. Computerprogramm mit Befehlen zur Durchführung des Verfahrens nach einem der Ansprüche 1 bis 9, wenn dieses Programm von einem oder mehreren Prozessoren ausgeführt wird.

11. Nicht transitorischer, computerlesbarer Speicher, auf dem ein Programm zur Durchführung des Verfahrens nach einem der Ansprüche 1 bis 9 gespeichert ist, wenn dieses Programm von einem oder mehreren Prozessoren ausgeführt wird.

**Claims**

1. A method for jointly regulating a voltage at each node of a distribution grid comprising a medium voltage branch, HTA, and at least one, and preferably a plurality of low voltage branches, BT, the distribution grid further comprising a plurality of energy generators, each low voltage branch being connected to the medium-voltage branch at a connection node at an HTA/BT transformer, each low voltage branch further comprising a reference node, a plurality of controllable nodes and a plurality of non-controllable nodes, the medium voltage branch being supplied by a high voltage branch connected to the medium voltage branch at a connection node at an HTB/HTA transformer with tap changer, the medium voltage branch further comprising a reference node, a plurality of controllable nodes and a plurality of non-controllable nodes, each node of the medium voltage and low voltage branches being subject to energy drawing off and/or injection operations, said at least one, or at least one of the plurality of, low voltage branch(es) being in three-phase mode, the method comprising:

- defining:

°a target voltage at each node of each low voltage branch,
°a first prescribed voltage range including the target voltage of each low voltage branch,
°a target voltage at each node of the medium voltage branch,
°a second prescribed voltage range including the target voltage of the medium voltage branch;

and the method comprising, at each step of a predetermined time:

- determining a voltage state of the low voltage branches;
- determining a voltage state of the medium voltage branch taking account of the electrical interactions of the low voltage branches connected thereto;
- and then comparing:

°the actual voltage state of each low voltage branch with the first prescribed voltage range,
°the actual voltage state of the medium voltage branch with the second prescribed voltage range;

- if at least one voltage of the low voltage branch and/or the medium voltage branch is respectively outside the first prescribed voltage range and/or the second prescribed voltage range:
- searching for a set of joint regulation commands allowing the actual voltage of the low voltage branch and the medium voltage branch to be respectively included in the first prescribed voltage range and in the second prescribed voltage range:
- determining and implementing at least one optimum regulation command among the set of joint regulation commands,

**characterised in that** searching for the set of joint regulation commands for each three-phase low voltage branch is preceded by constructing a three-phase admittance matrix comprising, for each three-phase low voltage branch:

°creating a list of nodes for each of the three phases of the three-phase low voltage branch by performing:

*tripling each node of the low voltage branch, one node of each node triplet being respectively associated with one of the three phases, and
*matching node indices of each of the three phases;

°obtaining three admittance sub-matrices respectively corresponding to an admittance matrix of each of the three phases of the low voltage branch;
°reconstructing a three-phase admittance matrix by concatenating the three admittance sub-matrices by taking account of a corrective admittance illustrating losses at the HTA/BT transformer of the low voltage branch considered.

2. The method according to claim 1, wherein:
determining said at least one optimum regulation command to be implemented among the set of regulation commands comprises:

- obtaining a ranked list of regulation commands according to a descending implementation priority order,
- simulating a joint regulation of the medium voltage branch and the low voltage branches by activating a first regulation command among the set of joint regulation commands, the first command activated corresponding to a first command on the ranked list, and, if the voltage state of the low voltage and medium voltage branches is not included in the first prescribed voltage range and/or the second prescribed voltage range,

°iteratively performing further joint regulation simulations by adding, at each iteration, the following regulation command in the ranked list, until the voltage states of the low voltage branches and the medium voltage branch are respectively included in the prescribed voltage range and the second safety range,

- when the voltage states of the low voltage branches and of the medium voltage branch are respectively included in the first prescribed voltage range and in the second prescribed voltage range, obtaining said at least one optimum regulation command to be implemented as an output.

3. The method according to one of the preceding claims, wherein searching for the set of joint regulation commands for each low voltage branch and for the medium voltage branch is preceded by a step of calculating regulation command values comprising:

- iteratively solving, by a fixed point technique, an optimisation problem taking account of:

°restrictions relating to the permissible domains of active and reactive powers at the controllable nodes,
°restrictions relating to the three-phase configuration of the low voltage branch,
each iteration comprising solving a linear program integrating a linearisation of the Kirchhoff equations, the program returning as an output the values of the regulation commands, the regulation commands comprising:

°adjusting a voltage value at the connection node of a low voltage branch to the medium voltage branch for tap changing the HTA/BT transformer, when changing is available,
°adjusting a voltage value at the connection node of the medium voltage branch for tap changing the HTB/HTA transformers,
°adjusting active power (P), in medium voltage and in low voltage,
°adjusting reactive power (Q) in medium voltage and in low voltage, and/or
°adjusting active and reactive power (P, Q), in medium voltage and in low voltage.

4. The method according to the preceding claim, wherein when a permissible domain of the active and reactive powers at the controllable nodes is not convex, the method comprises:

- convexifying the non-convex initial domain,
- following the resolution of the optimisation problem, checking that the adjustment values of the active and reactive powers (P, Q) are in the initial range and, if not,

*substituting the active and reactive power adjustment values (P, Q) with values included in the initial domain, to have a solution respecting the initial domain of active and reactive power adjustment.

5. The method according to one of the preceding claims, wherein searching for the set of joint regulation commands for the low voltage branches and the medium voltage branch comprises:

- respectively, defining a set of regulation commands for each low voltage branch and the medium voltage branch, each set of regulation commands comprising all possible regulation commands,
- for each low voltage branch, a first step of simulating regulation by implementing the set of the regulation commands of the low voltage branch considered,
- determining the voltage state of each low voltage branch, and
- when the voltage state of each low voltage branch is within the first prescribed voltage range:

°aggregating data relating to each low voltage branch at the respective connection node of each low voltage branch to the medium voltage branch,
°simulating regulation of the medium voltage branch by activating the set of the regulation commands of the medium voltage branch, taking account of the data aggregated,
°calculating the voltage values at the reference nodes of the low voltage branches aggregated,
°and for each low voltage branch not having a tap changer:

*the value of the voltage at the reference node of the low voltage branch is imposed on a value of the voltage at the connection node of the low voltage branch to the medium voltage branch, multiplied by a transformation ratio of the transformer,
the method then comprising iteratively implementing the following steps until a first stop criterion is met:

- modifying the set of commands of each low voltage branch considered by removing a command corresponding to tap changing the transformer,
- another step of simulating regulation of each low voltage branch not having a tap changer, by activating the set of regulation commands of each low voltage branch considered,
- and then, obtaining each voltage state of the low voltage branches not having a tap changer,
- returning to the data aggregation step,

if a low voltage branch has a tap changer, the set of regulation commands comprises all possible regulation commands, the method then comprising calculating the voltage states of the medium voltage and low voltage branches, following the respective activation of the sets of commands of each low voltage branch and of the medium voltage branch,

and

- when the voltage states of the medium and low voltage branches are respectively within the first prescribed voltage range and the second prescribed voltage range, obtaining each set of regulation commands corresponding to each low voltage branch and for the medium voltage branch, said sets of commands forming the set of joint regulation commands.

6. The method according to the preceding claim, wherein:

- if, following determining the voltage state of each low voltage branch, at least one voltage state of a low voltage branch is outside the first prescribed voltage range, an alarm is activated for said at least one low voltage branch, and/or
- if, following calculating the voltage states of the medium and low voltage branches, the voltage state of at least one low voltage branch or the voltage state of the medium voltage branch is respectively outside the first prescribed voltage range and/or the second prescribed voltage range, an alarm is activated.

7. The method according to one of the preceding claims, wherein determining the voltage state of the low voltage branches and the medium voltage branch comprises:

- determining the voltage state of each low voltage branch,
- and then, a step of aggregating data relating to each low voltage branch at the respective connection node of each low voltage branch to the medium voltage branch by

*Calculating a pair of active and reactive power values of each low voltage branch, each pair of active and reactive powers being respectively added to active and reactive power values at the connection nodes of each low voltage branch to the medium voltage branch, and by
*Correcting each diagonal term of an admittance matrix of the medium voltage branch, each diagonal term respectively corresponding to each connection node of a low voltage branch to the medium voltage branch;

- following the aggregation step, obtaining the actual voltage state at each node of the medium voltage branch and the low voltage branches.

8. The method according to the preceding claim, wherein the actual voltage states at each node of the medium voltage branch and the low voltage branches are obtained by iteratively applying the following steps, until a first predefined stop criterion is met:

- determining an actual voltage state of the medium voltage branch, taking account of the data aggregated of each low voltage branch, to obtain actual voltages at each node of the medium voltage branch,
- and then, determining an actual voltage state of each low voltage branch to obtain actual voltages at each node of each low voltage branch, from which new values of the active and reactive power pairs of each low voltage branch and the diagonal terms of the admittance matrix of the medium voltage branch are obtained,
- obtaining the actual voltage state at each node of the medium voltage branch and the low voltage branches when the first stop criterion is met.

9. A computer having a multi-core architecture and being arranged to implement a method according to one of the preceding claims.

10. A computer program, including instructions for implementing the method according to one of claims 1 to 9, when this program is executed by a or more processor(s).

11. A non-transitory computer-readable recording medium having a program recorded thereon for implementing the method according to one of claims 1 to 9, when this program is executed by one or more processor(s).

FIG. 1

S1 — Données fixes HTA/BT

S2 — Données variables BT

S3 — Données variables HTA

S4 — Etat en tension BT et HTA

S5 — Régulation nécessaire ?

S6 — Temporisation

N

O

S7 — Calcul commandes HTA et BT

S8 — Vérification de l'existence d'une solution

S9 — La solution permet la régulation ?

S10 — Alarme

N

O

S11 — Sélection de commandes optimales

S12 — Mise en oeuvre des commandes optimales

## FIG. 2

**FIG. 3**

EP 4 203 222 B1

**FIG. 4**

EP 4 203 222 B1

S20 — Etat en tension branches BT

S21 — Calcul des valeurs CorrectS et CorrectY nécessaires

S22 — Représentation agrégée de chaque sous-réseaux BT en un noeud équivalent

S23 — Etat en tension branche HTA

S24 — Obtention de nouvelles valeurs de tension sur les noeuds de rattachement des branches BT

S25 — Imposition de la valeur de Vref sur le noeud de référence des branches BT

S26 — Etat en tension branches BT

S27 — Calcul des nouvelles valeurs de CorrectS et CorrectY pour chaque branche BT

S28 — Les conditions d'arrêt des itérations sont-elles satisfaites ?

Non

Oui

S29 — Obtention de l'état en tension de chaque branche BT et de la branche HTA

## FIG. 5

S30 — Données fixes

S31 — Vcible

S32 — Vréf(cible) = Vopt

S33 — Construction d'un programme linéaire

S34 — Résolution du programme

S35 — Obtention valeur optimale initiale de la tension au noeud de référence et des valeurs optimales des puissances actives et réactives aux noeuds commandables

S36 — Amélioration de la précision de la valeur optimale initiale de la tension au noeud de référence pour obtenir une valeur optimale finale Vopt de la tension au noeud de référence

S37 — Raffinement itéractif du programme linéaire

## FIG. 6

EP 4 203 222 B1

| Matrice YTP | 1 | 2 | 3 | 4 | 5 | 6 | 7 | 8 | 9 | 10 | 11 | 12 | 13 |
|---|---|---|---|---|---|---|---|---|---|---|---|---|---|
| 1 | $-3 * y_t$ | | | | | | | | | | $y_t$ | $y_t$ | $y_t$ |
| 2 | | YY | | | | | | | | | Y (ind,re) | | |
| 3 | | | | | | | | | | | | | |
| 4 | | | | | | | | | | | | | |
| 5 | | | | | YY | | | | | | | Y (ind,re) | |
| 6 | | | | | | | | | | | | | |
| 7 | | | | | | | | | | | | | |
| 8 | | | | | | | | YY | | | | | Y (ind,re) |
| 9 | | | | | | | | | | | | | |
| 10 | | | | | | | | | | | | | |
| 11 | $y_t$ | Y (ref, ind) | | | | | | | | | Y (ref, ref) $- y_t$ | | |
| 12 | $y_t$ | | | | Y (ref, ind) | | | | | | | Y (ref, ref) $- y_t$ | |
| 13 | $y_t$ | | | | | | | Y (ref, ind) | | | | | Y (ref, ref) $- y_t$ |

FIG. 7

FIG. 8

FIG. 9A

FIG. 9B

FIG. 9C

FIG. 10

Obtention des listes hiérarchisées de
commandes pour les branches BT et HTA ⎯ S60

Simulation de l'activation de
la première commande ⎯ S61

S62 ⎯ Etat en tension

S64
Ajout de la commande
suivante à la commande
précédente

S63
L'état en tension
du réseau est-il conforme
? ⎯ Non

Oui

Obtention des commandes optimales et
suffisantes de régulation ⎯ S65

Mise en oeuvre des commandes optimales et suffisantes
pour effectuer la régulation conjointe de la branche
HTA et des branches BT ⎯ S66

## FIG. 11

FIG. 12

FIG. 13A

| Processeur 1 : BT_1 : LOAD_FLOW_MULTIRESEAUX | • • • | Processeur n : BT_n : LOAD_FLOW_MULTIRESEAUX |

Temporisation : attente du dernier calcul de Load Flow

| Processeur 1 : BT_1 : AGREGATION | • • • | Processeur n : BT_n : AGREGATION |

HTA : LOAD_FLOW_MULTIRESEAUX

| Processeur 1 : Calcul de la tension Vref_BT_1 | | Processeur n : Calcul de la tension Vref_BT_n |

## FIG. 13B

FIG. 14

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3084168
- FR 3006819

- CN 107196316 B
- EP 3598598 A